**Europäisches Patentamt**

**European Patent Office**

**Office européen des brevets**

(11) Publication number: **0 137 044 B1**

(12) **EUROPEAN PATENT SPECIFICATION**
published in accordance with Art.
158(3) EPC

(45) Date of publication of patent specification: **27.03.91**    (51) Int. Cl.⁵: **H01C 7/10, C04B 35/46**

(21) Application number: **84900746.3**

(22) Date of filing: **09.02.84**

(86) International application number:
**PCT/JP84/00035**

(87) International publication number:
**WO 84/03171 (16.08.84 84/20)**

(54) COMPOSITION OF PORCELAIN FOR VOLTAGE-DEPENDENT, NON-LINEAR RESISTOR.

| | |
|---|---|
| (30) Priority: 10.02.83 JP 20608/83<br>10.02.83 JP 20609/83<br>10.02.83 JP 20610/83<br>10.02.83 JP 20653/83<br>10.02.83 JP 20654/83<br>10.02.83 JP 20655/83<br>10.02.83 JP 20656/83<br>10.02.83 JP 20657/83<br>15.02.83 JP 24028/83<br>15.02.83 JP 24029/83<br>28.04.83 JP 75748/83<br>28.04.83 JP 75749/83<br>02.05.83 JP 77753/83<br>02.05.83 JP 77754/83<br>02.05.83 JP 77757/83<br>13.05.83 JP 84422/83<br>13.05.83 JP 84423/83<br>13.05.83 JP 84424/83<br>13.05.83 JP 84425/83<br>13.05.83 JP 84426/83 | (73) Proprietor: **MATSUSHITA ELECTRIC INDUSTRI-AL CO., LTD.**<br>**1006, Oaza Kadoma**<br>**Kadoma-shi, Osaka-fu, 571(JP)**<br><br>(72) Inventor: **NOI, Keiichi**<br>**16, Tanabe Kutsunugi Tanabecho, Tsuzuki-gun**<br>**Kyoto-fu 610-03(JP)**<br>Inventor: **TAKAMI, Akihiro**<br>**3-12, Amanogaharacho 3-chome Katano-shi**<br>**Osaka-fu 576(JP)**<br>Inventor: **EBINE, Kazuhide**<br>**3-26, Amanogaharacho 3-chome Katano-shi**<br>**Osaka-fu 576(JP)**<br>Inventor: **KUMAZAWA, Kimiko**<br>**10-9, Shikanodainishi 3-chome Ikoma-shi**<br>**Nara-ken 630-01(JP)** |

(43) Date of publication of application:
**17.04.85 Bulletin 85/16**

(45) Publication of the grant of the patent:
**27.03.91 Bulletin 91/13**

(84) Designated Contracting States:
**DE FR GB**

(56) References cited:
**EP-A- 0 044 981**  **EP-A- 0 070 540**
**EP-A- 0 101 824**  **JP-A- 5 735 303**
**JP-A- 5 816 504**  **JP-A- 5 842 220**
**JP-A-58 135 604**

**CHEMICAL ABSTRACTS, vol. 86, no. 18, May 1977, page 744, abstract 132232n, Columbus, Ohio, US; & JP - A - 77 04 098 (NICHICON CAPACITOR LTD.) 12-01-1977**

(74) Representative: **Dr. Elisabeth Jung Dr. Jürgen Schirdewahn Dipl.-Ing. Claus Gernhardt P.O. Box 40 14 68 Clemensstrasse 30 W-8000 München 40(DE)**

## Description

TECHNICAL FIELD

The present invention relates to a voltage dependent non-linear resistance ceramic composition for use in surge absorbing and noise elimination in various electric apparatuses and electronic apparatuses.

BACKGROUND ART

Heretofore, in various electric apparatuses and electronic apparatuses, in order to absorb extraordinary high voltage, elimination of noise, elimination of arc, and the like, SiC varistors or varistors of the ZnO system having a voltage-dependent non-linear resistance characteristics are used. Voltage-current characteristic of such varistors can be approximately represented by the following equation:

$$I = ( V/C )^\alpha ,$$

wherein I is current, V is voltage, C is a constant proper for the varistor, and $\alpha$ is a voltage non-linearity exponent.

The $\alpha$ of the SiC varistor is about 2-7, and for the ZnO system varistor there are some reaching an value of 50. Though such varistors have superior characteristics for absorbing relatively high voltage called surge, for voltages lower than varistor voltage (for instance, absorption of noise) almost no effect is observed, since its dielectric constant is low and its inherent capacitance is small, and their dielectric loss angles tan $\delta$ are as large as 5-10%.

On the other hand, for elimination of low voltage noise, static electricity, or the like, by appropriately. selecting composition and firing condition, semiconductor ceramic capacitors having an apparent dielectric constant of about $5 \times 10^4$ -$6 \times 10^4$ and tan $\delta$ of about 1% are utilized.

However, these semiconductor ceramic capacitors are liable to be destroyed or to become non-functional as capacitors when extraordinary high voltage such as surge is impressed thereon or a current above a certain limit is impressed on the element. For such reason, in the electric apparatuses or electronic apparatuses, for the purpose of both the absorbing of high voltage surge and the elimination of low voltage noise, the varistors are used in combination with capacitors and other components (for instance, coil), and for instance, a noise filter has such a configuration.

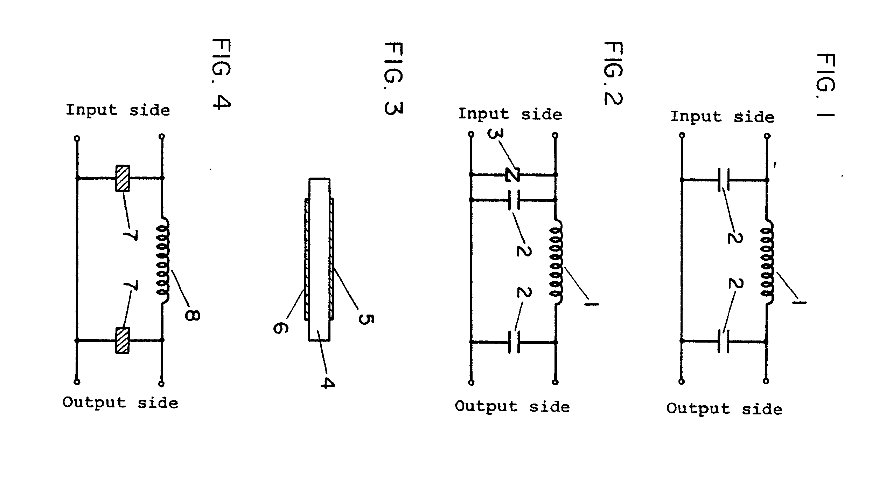

FIG. 1 shows a general noise filter circuit, FIG. 2 shows a conventional noise filter circuit constituted by combining a varistor, capacitors and a coil, wherein 1 is the coil, 2 are the capacitors and 3 is the varistor.

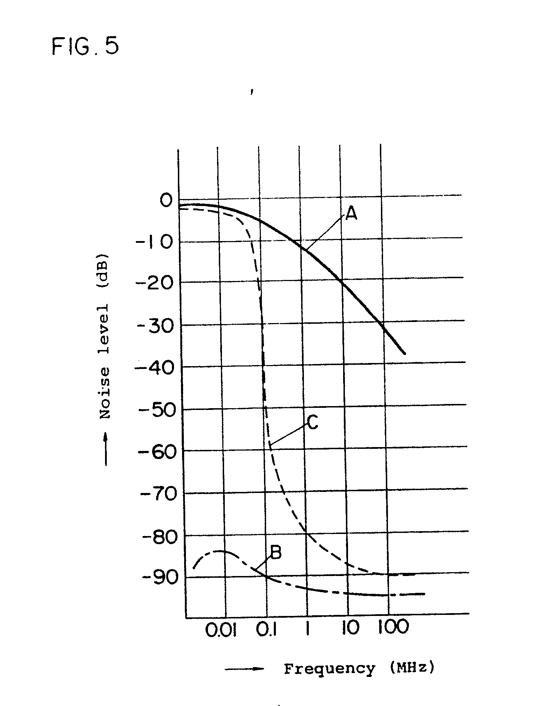

When a noise input A as shown in FIG. 5 is impressed on these circuits, the output characteristic from general noise filter circuit of FIG. 1 is such as C of FIG. 5, and noise is not eliminated sufficiently. The output characteristic from the conventional noise filter circuit including a varistor shown in FIG. 2 is such as B of FIG. 5, and though noise is eliminated, such configuration has the shortcoming that it has a large number of components in the inside of the apparatus and besides is contrary to the tendency of miniaturization of the apparatus.

Accordingly, an electronic component which absorbs extraordinaryly high voltage, can eliminate low voltage, such as noise, has a small number of components and is capable of miniaturization, is demanded. EP-A-0 070 and EP-A-0 044 981 both disclose non-linear resistance compositions which contain $SrTiO_3$ as the main component along with one or more further oxides.

DISCLOSURE OF THE INVENTION

The voltage-dependent non-linear resistance ceramic composition according to the present invention is characterized by comprising 80.000 - 99.990 mol% of $SrTiO_3$ and 0.005-10.000 mol% of $Dy_2O_3$ and at least one kind of compound selected from the group consisting of A

said A consists of 0.005-10.000 mol% in the form of oxide of at least one kind of element selected from the group consisting of K, Ca, Cd, In, Ba, Pb, Ag, Ce, La, Sc, Y, Cs, Au, Mg, Zr, Sn, Sb, W, Bi, Ni, Fe, Pt, Tl, Be, Li, Eu, Gd, Tb, Tm, Lu, Th, Ir, Os, Hf and Ru,

and the mol percentages of all stated ingredients adding up to 100 mol%. According to another embodiment of the invention there is envisaged a voltage-dependent non-linear resistance ceramic composition

characterized by comprising

79.800--99.989 mol% of Sr $TiO_3$, 0.005--10.000 mol% of $Dy_2O_3$, 0.001--0.200 mol% of $Nb_2O_5$ and

0.005--10.000 mol% in the form of oxide(s) of one or more element selected from the group consisting of K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf and Ru,

and the mol percentages of all stated ingredients adding up to 100 mol%. In a third embodiment of the invention the voltage-dependent non-linear resistance ceramic composition is characterized by comprising

80.000--99.990 mol% of $SrTiO_3$, 0.005--10.000 mol% of $Dy_2O_3$, 0.001--0.200 mol% of $Nb_2O_5$ and 0.005--10.000 mol% in the form of oxide(s) of one or more element selected from the group consisting of Ca, Ba, Ce, La, Y, Zr, Ni, Si and Gd,

and the mol percentages of all stated ingredients adding up to 100 mol%. In a preferred embodiment this type of ceramic composition comprises

79.800--99.989 mol% of $TiO_3$, 0.005--10.000 mol% of $Dy_2O_3$, 0.001--0.200 mol% of $Nb_2O_5$ and 0.005--10.000 mol% in the form of oxide(s) of one or more element selected from the group consisting of Ca, Ba, Ce, La, Y, Zr, Ni, Si and Gd,

the mol percentages of all stated ingredients adding up to 100 mol%. In a fourth embodiment of the invention the voltage-dependent non-linear resistance ceramic composition is characterized by comprising 80.000 - 99.990 mol% of $SrTiO_3$ and 0.005 - 10.000 mol% of $Ta_2O_5$ and 0.005 - 10.000 mol% in the form of oxide of at least one kind of element selected from the group consisting of K, Ca, Cd, In, Ba, Pb, Mg, Zr, Sn, Sb, W, Bi, Eu, Gd, Tb, Tm, Lu, Th, Ir, Os, Hf, Ru, Pt, Tl, La, Sc, Y, Cs and Au,

and the mol percentages of all stated ingredients adding up to 100 mol%.

In a preferred embodiment this type of ceramic composition comprises 80.000 - 99.990 mol% of $SrTiO_3$, 0.005 - 10.000 mol% of $Ta_2O_5$, and 0,005 - 10.000 mol% in the form of oxide(s) of one or more element selected from the group consisting of Cd, Ba, Zr, Gd, La and Y,

and the mol percentages of all stated ingredients adding up to 100 mol%.

In a fifth embodiment of the invention the voltage-dependent non-linear resistance ceramic composition is characterized by comprising 79.800 to 99.989 mol% of $SrTiO_3$, 0.005 - 10.000 Mol% of $Ta_2O_5$, 0.001 - 0.200 Mol% of $Nb_2O_5$ and 0.005 - 10.000 Mol% in the form of oxide(s) of one or more element selected from the group consisting of K, Ca, Cd, In, Ba, Pb, Mg, Zr, Sn, Sb, W, Bi, La, Sc, Y, Cs, Au, Eu, Gd, Tb, Tm, Lu, Th, Ir, Os, Hf and Ru,

and the mol percentages of all stated ingredients adding up to 100 mol%.

In a preferred embodiment this type of ceramic composition is characterized in that it comprises 79.800 - 99.989 mol% of $SrTiO_3$, 0.005 to 10.000 mol% of $Ta_2O_5$, 0.001 - 0.200 mol% of $Nb_2O_5$ and 0.005 - 10.000 mol% in the form of oxide(s) of one or more element selected from the group consisting of Cd, Ba, Ce, La, Y, Zr, Ni, Si and Gd,

and the mol percentages of all stated ingredients adding up to 100 mol%.

There are known ceramic materials with a voltage-dependent non-linear resistance, having however another composition both as regards the components regarded as essential and as regards their concentration.

EP-A1-0 070 540 discloses ceramic compositions that must contain as essential surge-proofing component $Na_2O$ in amounts of 0.02 to 2.50 mol parts. Additionally systems comprising $Nb_2O_5$ have a rather high content of this component, that is always greater than 0.2 mol percent.

EP-A1-0 044 981 discloses ceramic materials which are even more different from those of the present invention in that they must comprise as important ingredients one or more of the following components: $V_2O_5$, $Cr_2O_3$, $CuO$, $Cu_2O$, $MoO_3$, $MnO_2$, the necessary amounts being 0.001 - 5 mol percent.

The compositions according to the invention as heretofore defined do not contain such oxides.

"Chemical Abstracts", Vol 86(1977), 86132232n, describes a ceramic material made from $SrCO_3$, $TiO_2$ and $Dy_2O_3$ using additionally 0.05 to 0.5 % by weight of kaolin as a binder material. This clay material comprises chemically bound water and, therefore, the concentrations of oxides of Al and Si, on a molar basis, are very low. For the receipt disclosed, comprising 0.15% by weight of kaolin a calculation demonstrates that the ceramic material comprises 0.025 to 0.261 mol% $Al_2O_3$ and 0.051 to 0.523 mol% $SiO_2$.


BRIEF EXPLANATION OF THE DRAWING

FIG.1 is a circuit diagram of a general noise filter, FIG.2 is a circuit diagram of a noise filter using the conventional varistors and capacitors, FIG.3 is a sectional view of an element using the voltage dependent non-linear resistance ceramic composition in accordance with the present invention, FIG.4 is a circuit diagram of a noise filter using the voltage dependent non-linear resistance ceramic composition in accordance with the present invention, FIG.5 is a characteristic chart showing the situation in respect of input noise and output in accordance with the circuit of noise filters of the present invention and the prior art.

## THE BEST MODE FOR EMBODYING THE INVENTION

As a result of accumulating various experiments the inventors propose a voltage dependent non-linear resistance ceramic composition in a system different from the conventional composition by using strontium-titanate ($SrTiO_3$) as host material, and adding either $Dy_2O_3$ or $Ta_2O_5$ as semi-conductorization accelerating agent, and by further adding, depending on necessity, appropriate amounts of additives; hereafter the present invention is described with respect to the different embodiments as heretofore defined. Examples Nos. 1 to 8 are using $Dy_2O_3$ as addition, examples Nos. 9 to 15 are using $Dy_2O_3$ + $Nb_2O_5$ as addition. In examples Nos. 16 to 21 $Ta_2O_5$ is used instead of $Dy_2O_3$ and in examples Nos. 22 to 27 $Ta_2O_5$ in combination with $Nb_2O_5$ is added.

## EXAMPLE 1

$SrTiO_3$ and $Dy_2O_3$ and BaO are used in amounts to give the composition ratios as shown in the below-mentioned Table 1, they are blended for 6 hours by a wet method in a ball-mill or the like, and after drying the mixture is calcinated for 1 to 5 hours at 1000 - 1250°C in air. After grinding for 4 hours with the wet method in a ball mill or the like and subsequently drying, the mixture is granulated by adding 8 wt % of an organic binder (for instance polyvinyl alcohol), and then press-formed to the size of 8.0(mm) Ø x 1.0(mm) t with a pressing force of 1.0 t/cm². The granulated body is fired in a reducing atmosphere (e.g. $N_2$ : $H_2$ = 10 : 1) at 1300 - 1450°C for 1 - 6 hours. The fired body thus obtained has a specific resistance of 0.1 - 0.8 Ω.cm and an average granular size of 20 to 50 μm. The fired body is further fired in air at 1000 - 1300°C for 0.5 - 5 hours to obtain the fired body 4 of FIG.3. Both faces of the fired body 4 are ground with an abrasive, such as SiC. The diameters of the above-mentioned electrodes 5, 6 are selected to be 5.0(mm).

The characteristics of the elements thus obtained are shown in TABLE 1.

TABLE 1

| Sample No. | Composition ratio (mol %) | | | Characteristics | | | |
|---|---|---|---|---|---|---|---|
| | $SrTiO_3$ | $Dy_2O_3$ | BaO | $V_1$ mA (V/mm) | α | ε | tan δ(%) |
| 1* | 99.995 | 0 | 0.0005 | 98 | 1.0 | $4.0 \times 10^3$ | 41.6 |
| 2* | 99.800 | 0 | 0.200 | 86 | 1.7 | $4.0 \times 10^3$ | 33.7 |
| 3* | 99.000 | 0 | 1.000 | 82 | 2.0 | $5.0 \times 10^3$ | 31.9 |
| 4* | 90.000 | 0 | 10.000 | 65 | 2.9 | $8.0 \times 10^3$ | 24.7 |
| 5* | 99.995 | 0.005 | 0 | 39 | 3.2 | $6.0 \times 10^3$ | 9.6 |
| 6 | 99.990 | 0.005 | 0.005 | 68 | 6.4 | $1.0 \times 10^4$ | 5.4 |
| 7 | 99.795 | 0.005 | 0.200 | 59 | 9.1 | $1.8 \times 10^4$ | 3.3 |
| 8 | 98.995 | 0.005 | 1.000 | 43 | 17.7 | $2.0 \times 10^4$ | 2.7 |
| 9 | 89.995 | 0.005 | 10.000 | 30 | 18.0 | $2.5 \times 10^4$ | 3.5 |
| 10* | 84.995 | 0.005 | 15.000 | 26 | 11.5 | $2.6 \times 10^4$ | 8.8 |
| 11* | 99.800 | 0.200 | 0 | 16 | 5.1 | $8.0 \times 10^3$ | 6.1 |
| 12 | 99.795 | 0.200 | 0.005 | 53 | 17.7 | $1.7 \times 10^4$ | 3.4 |
| 13 | 99.600 | 0.200 | 0.200 | 45 | 18.7 | $2.4 \times 10^4$ | 2.3 |
| 14 | 98.800 | 0.200 | 1.000 | 31 | 21.3 | $2.9 \times 10^4$ | 2.5 |
| 15 | 89.800 | 0.200 | 10.000 | 23 | 23.4 | $3.6 \times 10^4$ | 3.2 |

EP 0 137 044 B1

| | | | | | | |
|---|---|---|---|---|---|---|
| 16* | 84.800 | 0.200 | 15.000 | 22 | 20.5 | $3.7 \times 10^4$ | 11.1 |
| 17* | 99.000 | 0.200 | 0 | 13 | 6.0 | $9.0 \times 10^3$ | 8.0 |
| 18 | 98.995 | 1.000 | 0.005 | 40 | 13.2 | $1.4 \times 10^4$ | 2.8 |
| 19 | 98.800 | 1.000 | 0.200 | 32 | 18.2 | $2.6 \times 10^4$ | 2.3 |
| 20 | 98.000 | 1.000 | 1.000 | 19 | 21.8 | $3.1 \times 10^4$ | 2.1 |
| 21 | 89.000 | 1.000 | 10.000 | 15 | 20.2 | $3.8 \times 10^4$ | 3.1 |
| 22* | 84.000 | 1.000 | 15.000 | 16 | 20.1 | $4.2 \times 10^4$ | 9.4 |
| 23* | 90.000 | 10.000 | 0 | 21 | 6.4 | $5.0 \times 10^3$ | 9.4 |
| 24 | 89.995 | 10.000 | 0.005 | 34 | 15.4 | $1.8 \times 10^4$ | 3.1 |
| 25 | 89.800 | 10.000 | 0.200 | 29 | 22.0 | $2.2 \times 10^4$ | 2.2 |
| 26 | 89.000 | 10.000 | 1.000 | 18 | 23.8 | $2.6 \times 10^4$ | 2.4 |
| 27 | 80.000 | 10.000 | 10.000 | 10 | 17.7 | $1.9 \times 10^4$ | 3.5 |
| 28* | 75.000 | 10.000 | 15.000 | 14 | 13.2 | $1.7 \times 10^4$ | 6.9 |
| 29* | 85.000 | 15.000 | 0 | 38 | 5.3 | $7.0 \times 10^3$ | 10.7 |
| 30* | 84.995 | 15.000 | 0.005 | 23 | 8.6 | $8.0 \times 10^3$ | 8.7 |
| 31* | 84.800 | 15.000 | 0.200 | 17 | 11.8 | $9.0 \times 10^3$ | 9.7 |
| 32* | 84.000 | 15.000 | 1.000 | 19 | 9.8 | $1.0 \times 1.0^4$ | 9.9 |

| 33* | 75.000 | 15.000 | 10.000 | 24 | 8.7 | $8.0 \times 10^3$ | 15.8 |
| 34* | 70.000 | 15.000 | 15.000 | 39 | 4.2 | $4.0 \times 10^3$ | 18.1 |

*······· Comparison sample

Eveluation of the characteristics of the elements as varistor can be made by $\alpha$ and C in a voltage-current characteristic equation:

$$I = (V/C)^\alpha$$

(wherein I is the current, V is the voltage, C is a constant proper to the varistor and $\alpha$ is a non-linearity exponent). Since the accurate measurement of C is difficult, in the present invention the characteristic assessment as a varistor is made by the value of varistor voltage for unit thickness when 1 mA of varistor current has flown (hereinafter expressed as $V_1$mA/mm) and by a value of

$$\alpha = 1/\log (V_{10}mA/V_1mA)$$

(wherein $V_{10}$mA is a varistor voltage when a varistor current of 10 mA has flown and $V_1$mA is a varistor

8

voltage when a varistor current of 1 mA has flown).

Characteristic assessment as capacitors are made by the dielectric constant and by the dielectric loss tan $\delta$ at a measurement frequency of 1 KHz. The above-mentioned data are those for a firing temperature of 1400°C and a firing time in the reducing atmosphere of 2 hours, respectively, and a firing temperature of 1200°C and a firing time in air of 3 hours, respectively.

EXAMPLE 2

$SrTiO_3$, $Dy_2O_3$ and $CeO_2$ are used in composition ratios as shown in the below-mentioned TABLE 2, and mixing, forming and firings are carried out in a similar operation as in the above-mentioned EXAMPLE 1, and the measurements are made under similar conditions, results are shown in TABLE 2.

TABLE 2

| Sample No. | Composition ratio (mol %) | | | Characteristics | | | |
|---|---|---|---|---|---|---|---|
| | $SrTiO_3$ | $Dy_2O_3$ | $CeO_2$ | $V_1 mA (V/mm)$ | $\alpha$ | $\epsilon$ | $\tan \delta (\%)$ |
| 1* | 99.995 | 0 | 0.005 | 88 | 1.0 | $4.0 \times 10^3$ | 9.1 |
| 2* | 99.800 | 0 | 0.200 | 81 | 1.4 | $4.0 \times 10^3$ | 6.3 |
| 3* | 99.000 | 0 | 1.000 | 72 | 1.8 | $4.0 \times 10^3$ | 0.4 |
| 4* | 90.000 | 0 | 10.000 | 67 | 4.0 | $7.0 \times 10^3$ | 9.7 |
| 5* | 99.995 | 0.005 | 0 | 39 | 3.2 | $6.0 \times 10^3$ | 9.6 |
| 6 | 99.990 | 0.005 | 0.005 | 70 | 6.6 | $1.0 \times 10^4$ | 4.5 |
| 7 | 99.795 | 0.005 | 0.200 | 57 | 10.1 | $1.9 \times 10^4$ | 3.0 |
| 8 | 98.995 | 0.005 | 1.000 | 52 | 17.9 | $2.1 \times 10^4$ | 2.6 |
| 9 | 89.995 | 0.005 | 10.000 | 40 | 19.8 | $2.6 \times 10^4$ | 3.4 |
| 10* | 84.995 | 0.005 | 15.000 | 33 | 9.1 | $2.5 \times 10^4$ | 9.0 |
| 11 | 99.800 | 0.200 | 0 | 16 | 5.1 | $8.0 \times 10^3$ | 6.1 |
| 12 | 99.795 | 0.200 | 0.005 | 62 | 18.3 | $1.9 \times 10^4$ | 3.2 |
| 13 | 99.600 | 0.200 | 0.200 | 49 | 20.3 | $2.6 \times 10^4$ | 2.8 |
| 14 | 98.800 | 0.200 | 1.000 | 36 | 23.3 | $3.0 \times 10^4$ | 2.7 |
| 15 | 89.800 | 0.200 | 10.000 | 30 | 22.5 | $3.5 \times 10^4$ | 2.4 |

| | | | | | | | | |
|---|---|---|---|---|---|---|---|---|
| 16* | 84.800 | 0.200 | 15.000 | 27 | 21.6 | $3.5 \times 10^4$ | 10.1 |
| 17* | 99.000 | 1.000 | 0 | 13 | 6.0 | $9.0 \times 10^3$ | 8.0 |
| 18 | 98.995 | 1.000 | 0.005 | 44 | 14.5 | $1.3 \times 10^4$ | 3.4 |
| 19 | 98.800 | 1.000 | 0.200 | 33 | 19.0 | $2.8 \times 10^4$ | 3.0 |
| 20 | 98.000 | 1.000 | 1.000 | 20 | 20.7 | $3.5 \times 10^4$ | 3.1 |
| 21 | 89.000 | 1.000 | 10.000 | 17 | 18.1 | $3.7 \times 10^4$ | 3.9 |
| 22* | 84.000 | 1.000 | 15.000 | 15 | 19.7 | $4.2 \times 10^4$ | 9.7 |
| 23* | 90.000 | 10.000 | 0 | 21 | 6.4 | $5.0 \times 10^3$ | 10.4 |
| 24 | 89.995 | 10.000 | 0.005 | 36 | 16.6 | $1.2 \times 10^4$ | 4.0 |
| 25 | 89.800 | 10.000 | 0.200 | 31 | 20.5 | $1.9 \times 10^4$ | 3.1 |
| 26 | 89.000 | 10.000 | 1.000 | 20 | 22.7 | $2.2 \times 10^4$ | 3.8 |
| 27 | 80.000 | 10.000 | 10.000 | 11 | 20.1 | $2.6 \times 10^4$ | 5.3 |
| 28* | 75.000 | 10.000 | 15.000 | 10 | 14.3 | $1.7 \times 10^4$ | 9.9 |
| 29* | 85.000 | 15.000 | 0 | 38 | 5.3 | $7.0 \times 10^3$ | 11.7 |
| 30* | 84.995 | 15.000 | 0.005 | 25 | 7.7 | $8.0 \times 10^3$ | 8.4 |
| 31* | 84.800 | 15.000 | 0.200 | 19 | 8.0 | $9.0 \times 10^3$ | 9.7 |
| 32* | 84.000 | 15.000 | 1.000 | 17 | 10.7 | $1.0 \times 10^4$ | 10.0 |
| 33* | 75.000 | 15.000 | 10.000 | 26 | 11.9 | $1.1 \times 10^4$ | 19.5 |
| 34* | 70.000 | 15.000 | 15.000 | 28 | 6.7 | $8.0 \times 10^3$ | 22.1 |

* ······ Comparison sample

## EXAMPLE 3

$SrTiO_3$, $Dy_2O_3$ and $La_2O_3$ are used in composition ratios shown in the below-mentioned TABLE 3, and mixing, forming and firings are carried out in a similar operation as in the above-mentioned EXAMPLE 1, and measurements are made under similar conditions. Results are shown in TABLE 3.

11

TABLE 3

| Sample No. | Composition ratio (mol %) | | | Characteristics | | | |
|---|---|---|---|---|---|---|---|
| | $SrTiO_3$ | $Dy_2O_3$ | $La_2O_3$ | $V_{1mA}$(V/mm) | $\alpha$ | $\varepsilon$ | tan $\delta$(%) |
| 1* | 99.995 | 0 | 0.005 | 111 | 1.0 | $4.0\times10^3$ | 34.6 |
| 2* | 99.800 | 0 | 0.200 | 127 | 1.4 | $4.0\times10^3$ | 32.1 |
| 3* | 99.000 | 0 | 1.000 | 195 | 1.9 | $9.0\times10^3$ | 29.1 |
| 4* | 90.000 | 0 | 10.000 | 242 | 2.2 | $5.0\times10^3$ | 21.3 |
| 5* | 99.995 | 0.005 | 0 | 39 | 3.2 | $6.0\times10^3$ | 9.6 |
| 6 | 99.990 | 0.005 | 0.005 | 93 | 7.0 | $8.0\times10^3$ | 4.4 |
| 7 | 99.795 | 0.005 | 0.200 | 81 | 10.4 | $1.0\times10^4$ | 3.0 |
| 8 | 98.995 | 0.005 | 1.000 | 71 | 17.8 | $1.5\times10^4$ | 2.2 |
| 9 | 89.995 | 0.005 | 10.000 | 80 | 19.1 | $1.8\times10^4$ | 2.0 |
| 10* | 84.995 | 0.005 | 15.000 | 88 | 18.5 | $2.1\times10^4$ | 5.7 |
| 11* | 99.800 | 0.200 | 0 | 16 | 5.1 | $8.0\times10^3$ | 6.1 |
| 12 | 99.795 | 0.200 | 0.005 | 87 | 11.0 | $1.1\times10^4$ | 2.2 |
| 13 | 99.600 | 0.200 | 0.200 | 65 | 17.2 | $1.6\times10^4$ | 2.1 |
| 14 | 98.800 | 0.200 | 1.000 | 58 | 18.2 | $2.0\times10^4$ | 1.9 |
| 15 | 89.800 | 0.200 | 10.000 | 51 | 20.3 | $2.7\times10^4$ | 2.3 |

EP 0 137 044 B1

| No. | | | | | | | |
|---|---|---|---|---|---|---|---|
| 16* | 84.800 | 0.200 | 15.000 | 64 | 19.7 | $2.8 \times 10^4$ | 3.9 |
| 17* | 99.000 | 1.000 | 0 | 13 | 6.0 | $9.0 \times 10^3$ | 8.0 |
| 18 | 98.995 | 1.000 | 0.005 | 69 | 12.3 | $1.0 \times 10^4$ | 2.4 |
| 19 | 98.800 | 1.000 | 0.200 | 68 | 14.1 | $1.8 \times 10^4$ | 2.2 |
| 20 | 98.000 | 1.000 | 1.000 | 80 | 18.0 | $2.22 \times 10^4$ | 2.0 |
| 21 | 89.000 | 1.000 | 10.000 | 94 | 18.3 | $2.3 \times 10^4$ | 3.3 |
| 22* | 84.000 | 1.000 | 15.000 | 123 | 11.5 | $1.0 \times 10^4$ | 9.7 |
| 23* | 90.000 | 10.000 | 0 | 21 | 6.4 | $5.0 \times 10^3$ | 9.4 |
| 24 | 89.995 | 10.000 | 0.005 | 89 | 13.6 | $1.7 \times 10^4$ | 3.2 |
| 25 | 89.800 | 10.000 | 0.200 | 97 | 14.3 | $2.1 \times 10^4$ | 3.1 |
| 26 | 89.000 | 10.000 | 1.000 | 99 | 12.1 | $2.5 \times 10^4$ | 3.0 |
| 27 | 80.000 | 10.000 | 10.000 | 141 | 10.4 | $2.4 \times 10^4$ | 4.9 |
| 28* | 75.000 | 10.000 | 15.000 | 164 | 8.0 | $2.0 \times 10^4$ | 9.9 |
| 29* | 85.000 | 15.000 | 0 | 38 | 5.3 | $7.0 \times 10^3$ | 10.7 |
| 30* | 84.995 | 15.000 | 0.005 | 95 | 8.2 | $8.0 \times 10^3$ | 8.2 |
| 31* | 84.800 | 15.000 | 0.200 | 99 | 9.0 | $8.0 \times 10^3$ | 9.5 |
| 32* | 84.000 | 15.000 | 1.000 | 124 | 7.6 | $1.0 \times 10^4$ | 13.0 |
| 33* | 75.000 | 15.000 | 10.000 | 185 | 6.2 | $7.0 \times 10^3$ | 23.7 |
| 34* | 70.000 | 15.000 | 15.000 | 213 | 3.4 | $4.0 \times 10^3$ | 30.4 |

* ‥‥‥‥‥ Comparison sample

## EXAMPLE 4

SrTiO$_3$, Dy$_2$O$_3$ and Y$_2$O$_3$ are used in composition ratios as shown in the below-mentioned TABLE 4, and mixing, forming and firings are carried out in a similar operation as in the above-mentioned EXAMPLE 1, and the measurements are made under similar conditions. Results are shown in TABLE 4.

TABLE 4

| Sample No. | Composition ratio (mol %) | | | Characteristics | | | |
|---|---|---|---|---|---|---|---|
| | $SrTiO_3$ | $Dy_2O_3$ | $Y_2O_3$ | $V_1$mA (V/mm) | $\alpha$ | $\varepsilon$ | tan $\delta$(%) |
| 1* | 99.995 | 0 | 0.005 | 91 | 1.0 | $4.0 \times 10^3$ | 44.3 |
| 2* | 99.800 | 0 | 0.200 | 117 | 1.7 | $4.0 \times 10^3$ | 39.8 |
| 3* | 99.000 | 0 | 1.000 | 170 | 2.1 | $8.0 \times 10^3$ | 30.0 |
| 4* | 90.000 | 0 | 10.000 | 186 | 2.5 | $7.0 \times 10^3$ | 27.1 |
| 5* | 99.995 | 0.005 | 0 | 39 | 3.2 | $6.0 \times 10^3$ | 9.6 |
| 6 | 99.990 | 0.005 | 0.005 | 78 | 6.9 | $1.0 \times 10^4$ | 5.3 |
| 7 | 99.795 | 0.005 | 0.200 | 71 | 10.5 | $1.5 \times 10^4$ | 3.0 |
| 8 | 98.995 | 0.005 | 1.000 | 77 | 18.7 | $1.9 \times 10^4$ | 2.9 |
| 9 | 89.995 | 0.005 | 10.000 | 86 | 20.1 | $2.1 \times 10^4$ | 2.7 |
| 10* | 84.995 | 0.005 | 15.000 | 94 | 18.0 | $2.2 \times 10^4$ | 7.6 |
| 11* | 99.800 | 0.200 | 0 | 16 | 5.1 | $8.0 \times 10^3$ | 6.1 |
| 12 | 99.795 | 0.200 | 0.005 | 67 | 12.4 | $1.5 \times 10^4$ | 3.2 |
| 13 | 99.600 | 0.200 | 0.200 | 52 | 17.9 | $2.6 \times 10^4$ | 2.4 |
| 14 | 98.800 | 0.200 | 1.000 | 48 | 20.8 | $3.0 \times 10^4$ | 2.2 |
| 15 | 89.800 | 0.200 | 10.000 | 51 | 24.4 | $3.2 \times 10^4$ | 2.9 |

EP 0 137 044 B1

EP 0 137 044 B1

| Sample No. | | | | | | | | |
|---|---|---|---|---|---|---|---|
| 16 * | 84.800 | 0.200 | 15.000 | 65 | 19.1 | $3.0 \times 10^4$ | 8.3 |
| 17 * | 99.000 | 1.000 | 0 | 13 | 6.0 | $9.0 \times 10^3$ | 8.0 |
| 18 | 98.995 | 1.000 | 0.005 | 58 | 14.2 | $1.6 \times 10^4$ | 2.5 |
| 19 | 98.800 | 1.000 | 0.200 | 64 | 19.7 | $2.2 \times 10^4$ | 2.2 |
| 20 | 98.000 | 1.000 | 1.000 | 77 | 22.8 | $2.8 \times 10^4$ | 2.0 |
| 21 | 89.000 | 1.000 | 10.000 | 84 | 24.0 | $2.4 \times 10^4$ | 3.1 |
| 22 * | 84.000 | 1.000 | 15.000 | 108 | 21.0 | $1.3 \times 10^4$ | 8.9 |
| 23 * | 90.000 | 10.000 | 0 | 21 | 6.4 | $5.0 \times 10^3$ | 9.4 |
| 24 | 89.995 | 10.000 | 0.005 | 88 | 17.6 | $1.7 \times 10^4$ | 3.2 |
| 25 | 89.800 | 10.000 | 0.200 | 96 | 19.2 | $2.0 \times 10^4$ | 2.8 |
| 26 | 89.000 | 10.000 | 1.000 | 99 | 23.1 | $2.6 \times 10^4$ | 3.1 |
| 27 | 80.000 | 10.000 | 10.000 | 114 | 24.3 | $2.4 \times 10^4$ | 3.7 |
| 28 * | 75.000 | 10.000 | 15.000 | 147 | 23.0 | $2.2 \times 10^4$ | 8.9 |
| 29 * | 85.000 | 15.000 | 0 | 38 | 5.3 | $7.0 \times 10^3$ | 10.7 |
| 30 * | 84.995 | 15.000 | 0.005 | 90 | 6.7 | $9.0 \times 10^3$ | 7.2 |
| 31 * | 84.800 | 15.000 | 0.200 | 94 | 8.2 | $1.0 \times 10^4$ | 8.5 |
| 32 * | 84.000 | 15.000 | 1.000 | 119 | 9.4 | $7.0 \times 10^3$ | 9.4 |
| 33 * | 75.000 | 15.000 | 10.000 | 158 | 7.0 | $5.0 \times 10^3$ | 14.3 |
| 34 * | 70.000 | 15.000 | 15.000 | 181 | 6.4 | $4.0 \times 10^3$ | 22.3 |

* ...... Comparison sample

## EXAMPLE 5

$SrTiO_3$, $Dy_2O_4$ and $ZrO_2$ are used in composition ratios shown in the below-mentioned TABLE 5, and mixing, forming and firings are carried out in a similar operation as in the above-mentioned EXAMPLE 1, and the measurements are made under similar conditions; Results are shown in TABLE 5.

15

TABLE 5

| Sample No. | Composition ratio (mol %) | | | Characteristics | | | |
|---|---|---|---|---|---|---|---|
| | $SrTiO_3$ | $Dy_2O_3$ | $ZrO_2$ | $V_1mA(V/mm)$ | $\alpha$ | $\varepsilon$ | $\tan \delta(\%)$ |
| 1* | 99.9995 | 0 | 0.005 | 101 | 1.0 | $4.0 \times 10^3$ | 9.2 |
| 2* | 99.800 | 0 | 0.200 | 127 | 1.9 | $4.0 \times 10^3$ | 4.4 |
| 3* | 99.000 | 0 | 1.000 | 171 | 2.3 | $7.0 \times 10^3$ | 1.3 |
| 4* | 90.000 | 0 | 10.000 | 196 | 2.8 | $8.0 \times 10^3$ | 4.5 |
| 5* | 99.995 | 0.005 | 0 | 39 | 3.2 | $6.0 \times 10^3$ | 9.6 |
| 6 | 99.990 | 0.005 | 0.005 | 64 | 6.7 | $1.1 \times 10^4$ | 5.4 |
| 7 | 99.795 | 0.005 | 0.200 | 71 | 10.3 | $1.7 \times 10^4$ | 2.9 |
| 8 | 98.995 | 0.005 | 1.000 | 78 | 19.8 | $2.2 \times 10^4$ | 2.4 |
| 9 | 89.995 | 0.005 | 10.000 | 86 | 21.0 | $2.7 \times 10^4$ | 2.6 |
| 10* | 84.995 | 0.005 | 15.000 | 95 | 17.8 | $2.7 \times 10^4$ | 7.4 |
| 11* | 99.800 | 0.200 | 0 | 16 | 5.1 | $8.0 \times 10^3$ | 6.1 |
| 12 | 99.795 | 0.200 | 0.005 | 56 | 14.2 | $1.9 \times 10^4$ | 3.2 |
| 13 | 99.600 | 0.200 | 0.200 | 51 | 19.9 | $3.1 \times 10^4$ | 2.8 |
| 14 | 98.800 | 0.200 | 1.000 | 49 | 22.0 | $3.5 \times 10^4$ | 2.3 |
| 15 | 89.800 | 0.200 | 10.000 | 58 | 20.7 | $3.8 \times 10^4$ | 2.9 |

| Sample No. | | | | | | | |
|---|---|---|---|---|---|---|---|
| 16* | 84.800 | 0.200 | 15.000 | 81 | 19.7 | $3.2 \times 10^4$ | 9.2 |
| 17* | 99.000 | 1.000 | 0 | 13 | 6.0 | $9.0 \times 10^3$ | 8.0 |
| 18 | 98.995 | 1.000 | 0.005 | 59 | 12.4 | $2.0 \times 10^4$ | 3.7 |
| 19 | 98.800 | 1.000 | 0.200 | 65 | 19.9 | $3.1 \times 10^4$ | 3.1 |
| 20 | 98.000 | 1.000 | 1.000 | 77 | 20.9 | $3.8 \times 10^4$ | 3.2 |
| 21 | 89.000 | 1.000 | 10.000 | 83 | 22.0 | $4.4 \times 10^4$ | 3.9 |
| 22* | 84.000 | 1.000 | 15.000 | 107 | 14.6 | $4.3 \times 10^4$ | 9.8 |
| 23* | 90.000 | 10.000 | 0 | 21 | 6.4 | $5.0 \times 10^3$ | 9.4 |
| 24 | 89.800 | 10.000 | 0.005 | 90 | 16.9 | $1.8 \times 10^4$ | 4.0 |
| 25 | 89.800 | 10.000 | 0.200 | 95 | 19.4 | $2.6 \times 10^4$ | 3.3 |
| 26 | 89.000 | 10.000 | 1.000 | 98 | 21.9 | $3.1 \times 10^4$ | 3.0 |
| 27 | 80.000 | 10.000 | 10.000 | 140 | 23.3 | $2.9 \times 10^4$ | 4.7 |
| 28* | 75.000 | 10.000 | 15.000 | 171 | 21.0 | $2.7 \times 10^3$ | 6.9 |
| 29* | 85.000 | 15.000 | 0 | 38 | 5.3 | $7.0 \times 10^3$ | 10.7 |
| 30* | 84.995 | 15.000 | 0.005 | 92 | 9.4 | $8.0 \times 10^3$ | 8.0 |
| 31* | 84.800 | 15.000 | 0.200 | 96 | 11.2 | $1.0 \times 10^4$ | 8.0 |
| 32* | 84.000 | 15.000 | 1.000 | 117 | 10.8 | $1.1 \times 10^4$ | 9.7 |
| 33* | 75.000 | 15.000 | 10.000 | 169 | 9.5 | $7.0 \times 10^3$ | 12.4 |
| 34* | 70.000 | 15.000 | 15.000 | 192 | 9.0 | $4.0 \times 10^3$ | 23.3 |

* ······· Comparison sample

EXAMPLE 6

$SrTiO_3$, $Dy_2O_3$ and $NiO$ are used in composition ratios as shown in the below-mentioned TABLE 6, and mixing, forming and firings are carried out in a similar operation as in the above-mentioned EXAMPLE 1, and the measurements are made under similar conditions. Results are shown in TABLE 6.

TABLE 6

| Sample No. | Composition ratio (mol %) | | | Characteristics | | | |
|---|---|---|---|---|---|---|---|
| | $SrTiO_3$ | $Dy_2O_3$ | NiO | $V_1 mA (V/mm)$ | $\alpha$ | $\epsilon$ | $\tan \delta (\%)$ |
| 1* | 9 9.9 9 5 | 0 | 0.0 0 5 | 9 8 | 1.0 | $4.0 \times 10^3$ | 4 0.4 |
| 2* | 9 9.8 0 0 | 0 | 0.2 0 0 | 9 0 | 1.8 | $4.0 \times 10^3$ | 3 3.9 |
| 3* | 9 9.0 0 0 | 0 | 1.0 0 0 | 8 7 | 2.1 | $5.0 \times 10^3$ | 3 0.0 |
| 4* | 9 0.0 0 0 | 0 | 1 0.0 0 0 | 6 2 | 2.9 | $9.0 \times 10^3$ | 2 6.0 |
| 5* | 9 9.9 9 5 | 0.0 0 5 | 0 | 3 9 | 3.2 | $6.0 \times 10^3$ | 9.6 |
| 6 | 9 9.9 9 0 | 0.0 0 5 | 0.0 0 5 | 7 8 | 6.1 | $1.0 \times 10^4$ | 6.4 |
| 7 | 9 9.7 9 5 | 0.0 0 5 | 0.2 0 0 | 6 0 | 9.4 | $1.6 \times 10^4$ | 3.2 |
| 8 | 9 8.9 9 5 | 0.0 0 5 | 1.0 0 0 | 4 4 | 1 6.8 | $1.9 \times 10^4$ | 2.6 |
| 9 | 8 9.9 9 5 | 0.0 0 5 | 1 0.0 0 0 | 2 9 | 1 8.3 | $2.2 \times 10^4$ | 3.9 |
| 1 0* | 8 4.9 9 5 | 0.0 0 5 | 1 5.0 0 0 | 2 5 | 1 0.7 | $2.6 \times 10^4$ | 8.0 |
| 1 1* | 9 9.8 0 0 | 0.2 0 0 | 0 | 1 6 | 5.1 | $8.0 \times 10^3$ | 6.1 |
| 1 2 | 9 9.7 9 5 | 0.2 0 0 | 0.0 0 5 | 6 3 | 1 4.7 | $2.1 \times 10^4$ | 3.8 |
| 1 3 | 9 9.6 6 0 | 0.2 0 0 | 0.2 0 0 | 5 0 | 1 7.1 | $2.9 \times 10^4$ | 2.8 |
| 1 4 | 9 8.8 8 0 | 0.2 0 0 | 1.0 0 0 | 3 6 | 2 0.3 | $3.2 \times 10^4$ | 2.6 |
| 1 5 | 8 9.8 8 0 | 0.2 0 0 | 1 0.0 0 0 | 2 6 | 1 9.4 | $3.5 \times 10^4$ | 3.4 |

EP 0 137 044 B1

| | | | | | | | |
|---|---|---|---|---|---|---|---|
| 16* | 84.800 | 0.200 | 15.000 | 23 | 18.1 | $3.8 \times 10^4$ | 8.8 |
| 17* | 99.000 | 1.000 | 0 | 13 | 6.0 | $9.0 \times 10^3$ | 8.0 |
| 18 | 98.995 | 1.000 | 0.005 | 51 | 14.0 | $2.5 \times 10^4$ | 3.0 |
| 19 | 98.800 | 1.000 | 0.200 | 32 | 19.1 | $3.2 \times 10^4$ | 2.7 |
| 20 | 98.000 | 1.000 | 1.000 | 21 | 22.7 | $3.7 \times 10^4$ | 2.4 |
| 21* | 89.000 | 1.000 | 10.000 | 17 | 23.6 | $3.8 \times 10^4$ | 2.8 |
| 22* | 84.000 | 1.000 | 15.000 | 16 | 23.2 | $4.4 \times 10^4$ | 10.1 |
| 23* | 90.000 | 10.000 | 0 | 21 | 6.4 | $5.0 \times 10^3$ | 9.4 |
| 24 | 89.995 | 10.000 | 0.005 | 44 | 15.4 | $1.8 \times 10^4$ | 3.1 |
| 25 | 89.800 | 10.000 | 0.200 | 31 | 20.9 | $2.2 \times 10^4$ | 2.4 |
| 26 | 89.000 | 10.000 | 1.000 | 19 | 22.0 | $2.4 \times 10^4$ | 3.0 |
| 27 | 80.000 | 10.000 | 10.000 | 12 | 13.9 | $1.9 \times 10^4$ | 4.6 |
| 28* | 75.000 | 10.000 | 15.000 | 14 | 9.8 | $1.5 \times 10^4$ | 6.3 |
| 29* | 85.000 | 15.000 | 0 | 38 | 5.3 | $7.0 \times 10^3$ | 10.7 |
| 30* | 84.995 | 15.000 | 0.005 | 22 | 9.9 | $7.0 \times 10^3$ | 8.1 |
| 31* | 84.800 | 15.000 | 0.200 | 17 | 12.3 | $9.0 \times 10^3$ | 7.9 |
| 32* | 84.000 | 15.000 | 1.000 | 14 | 9.9 | $8.0 \times 10^3$ | 9.2 |
| 33* | 75.000 | 15.000 | 10.000 | 19 | 8.7 | $7.0 \times 10^3$ | 9.8 |
| 34* | 70.000 | 15.000 | 15.000 | 35 | 6.3 | $5.0 \times 10^3$ | 22.1 |

* ...... Comparison sample

EXAMPLE 7

$SrTiO_3$, $Dy_2O_3$ and $Gd_2O_3$ are used in composition ratios as shown in the below-mentioned TABLE 7 and mixing, forming and firings are carried out in a similar operation as in the above-mentioned EXAMPLE 1, and the measurements are made under similar conditions. Results are shown in TABLE 7.

TABLE 7

| Sample No. | Composition ratio (mol %) | | | Characteristics | | | |
|---|---|---|---|---|---|---|---|
| | $SrTiO_3$ | $Dy_2O_3$ | $Gd_2O_3$ | $V_1mA(V/mm)$ | $\alpha$ | $\varepsilon$ | $\tan \delta(\%)$ |
| 1* | 99.995 | 0 | 0.005 | 110 | 1.0 | $4.0 \times 10^3$ | 45.6 |
| 2* | 99.800 | 0 | 0.200 | 116 | 1.6 | $4.0 \times 10^3$ | 40.1 |
| 3* | 99.000 | 0 | 1.000 | 184 | 2.1 | $8.0 \times 10^3$ | 32.3 |
| 4* | 90.000 | 0 | 10.000 | 224 | 2.5 | $6.0 \times 10^3$ | 27.0 |
| 5* | 99.995 | 0.005 | 0 | 39 | 3.2 | $6.0 \times 10^3$ | 9.6 |
| 6 | 99.990 | 0.005 | 0.005 | 90 | 6.8 | $7.0 \times 10^3$ | 4.3 |
| 7 | 99.795 | 0.005 | 0.200 | 79 | 10.2 | $1.0 \times 10^4$ | 3.0 |
| 8 | 98.995 | 0.005 | 1.000 | 72 | 15.9 | $1.5 \times 10^4$ | 2.5 |
| 9 | 89.995 | 0.005 | 10.000 | 81 | 19.3 | $1.9 \times 10^4$ | 2.6 |
| 10* | 84.995 | 0.005 | 15.000 | 90 | 20.0 | $2.3 \times 10^4$ | 4.9 |
| 11* | 99.800 | 0.200 | 0 | 16 | 5.1 | $8.0 \times 10^4$ | 6.1 |
| 12 | 99.795 | 0.200 | 0.005 | 85 | 7.4 | $1.2 \times 10^4$ | 3.2 |
| 13 | 99.600 | 0.200 | 0.200 | 61 | 13.2 | $1.7 \times 10^4$ | 2.8 |
| 14 | 98.800 | 0.200 | 1.000 | 57 | 17.9 | $2.1 \times 10^4$ | 2.0 |
| 15 | 89.800 | 0.200 | 10.000 | 50 | 19.8 | $2.8 \times 10^4$ | 2.5 |

EP 0 137 044 B1

| Sample No. | | | | | | | |
|---|---|---|---|---|---|---|---|
| 16* | 84.800 | 0.200 | 15.000 | 63 | 19.5 | $2.9 \times 10^4$ | 4.9 |
| 17* | 99.000 | 1.000 | 0 | 13 | 6.0 | $9.0 \times 10^3$ | 8.0 |
| 18 | 98.995 | 1.000 | 0.005 | 67 | 10.3 | $1.4 \times 10^4$ | 3.6 |
| 19 | 98.800 | 1.000 | 0.200 | 63 | 12.4 | $1.8 \times 10^4$ | 3.4 |
| 20 | 98.000 | 1.000 | 1.000 | 71 | 13.5 | $2.3 \times 10^4$ | 3.1 |
| 21 | 89.000 | 1.000 | 10.000 | 93 | 18.0 | $2.0 \times 10^4$ | 3.9 |
| 22* | 84.000 | 1.000 | 15.000 | 112 | 18.9 | $1.4 \times 10^4$ | 9.2 |
| 23* | 90.000 | 10.000 | 0 | 21 | 6.4 | $5.0 \times 10^3$ | 9.4 |
| 24 | 89.995 | 10.000 | 0.005 | 90 | 12.6 | $1.8 \times 10^4$ | 3.5 |
| 25 | 89.800 | 10.000 | 0.200 | 93 | 13.4 | $2.2 \times 10^4$ | 3.1 |
| 26 | 89.000 | 10.000 | 1.000 | 97 | 13.9 | $2.6 \times 10^4$ | 3.0 |
| 27 | 80.000 | 10.000 | 10.00 | 114 | 12.7 | $2.4 \times 10^4$ | 4.8 |
| 28* | 75.000 | 10.000 | 15.000 | 153 | 10.5 | $1.9 \times 10^4$ | 10.0 |
| 29* | 85.000 | 15.000 | 0 | 38 | 5.3 | $7.0 \times 10^3$ | 10.7 |
| 30* | 84.995 | 15.000 | 0.005 | 94 | 9.0 | $8.0 \times 10^3$ | 9.5 |
| 31* | 84.800 | 15.000 | 0.200 | 99 | 8.2 | $9.0 \times 10^3$ | 10.2 |
| 32* | 84.000 | 15.000 | 1.000 | 129 | 8.0 | $1.0 \times 10^4$ | 13.7 |
| 33* | 75.000 | 15.000 | 10.000 | 180 | 6.6 | $6.0 \times 10^3$ | 27.4 |
| 34* | 70.000 | 15.000 | 15.000 | 231 | 4.5 | $4.0 \times 10^3$ | 30.5 |

* ······· Comparison sample

As shown by EXAMPLEs 1 through 7, $Dy_2O_3$ when added in amounts in a range of 0.005-10.000 mol %, contributes to reduce specific resistance of the reduced fired body, and by re-firing in air it shows varistor characteristics.

This is because the granules and grain boundaries of the fired body obtained by the reduced firing have low resistances, and by re-firing in air only the crystal boundaries are gaining a high resistance thereby forming electric barriers.

However, when only $Dy_2O_3$ is added, the electric barrier formed at the grain boundaries is small, and the varistor characteristics are relatively small.

Accordingly, by adding additives such as BaO, $CeO_2$, $La_2O_3$, $Y_2O_3$, $ZrO_2$, NiO, $SiO_2$ or $Gd_2O_3$, the

additive is segregated at the grain boundaries during the reduced firing, and by re-firing in air such additives form large electric barriers at the grain boundary, thereby making the varistor characteristics large.

By making only the crystal grain boundary high in resistance, capacitance characteristics are present between crystal granule-crystal grain boundaries-crystal granules.

Accordingly, by adding $Dy_2O_3$ and still another additive, such as $BaO$, $CeO_2$, $La_2O_3$, $Y_2O_3$, $ZrO_2$, $NiO$, $SiO_2$, $Gd_2O_3$ to $SrTiO_3$, it is possible to provide characteristics which combine the varistor characteristics and the capacitance characteristics.

Though in the above-mentioned EXAMPLES 1-8, the elucidation was made for the cases where only one other additive was added besides $Dy_2O_3$, it was confirmed that the same effect was obtained even when two kinds or more oxides of elements of the group consisting of K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf and Ru were used in a manner that the total added amount is within the above-mentioned range.

## EXAMPLE 8

$SrTiO_3$, an extremely small amount of $Nb_2O_5$ which was existing from the initial stage of material ($Nb_2O_5$ content in the material used in the present example was 0.050 mol %), $Dy_2O_3$ as a metal oxide for acceleration of semiconductorization and CaO as element to improve non-linearity were used in amounts necessary to give the composition ratios shown in the below-mentioned TABLE 8. They were mixed and ground and dried, and thereafter calcinated at $1000°C$ for 4 hours. This mixture was then ground by a wet method in a ball mill or the like for 4 hours, and dried, subsequently, the mixture was granulated by adding 8 wt % of an organic binder (e.g. polyvinylalcohol) and pressformed into a shape of disc of 8.0 Ø (mm) x 1.0 t (mm) with a forming pressure of about 1.0 t/cm². The formed body was fired for 4 hours in a reducing atmosphere (e.g. $N_2$:$H_2$ = 1:1, flow rate is 1.0ℓ/min) and at $1350°C$. The specific resistance of the fired body thus obtained was averagely 0.3 Ω.cm and the average granule size was 30 μm.

The above-mentioned fired body was fired in air for 2 hours at $1300°C$ to obtain a sintered body 4 of FIG.3. Both faces of the above-mentioned sintered body 4 are ground by using an abrasive such as SiC or the like, and the electrodes 5, 6 are formed by using a conductive metal such as Ag on the ground faces. Sizes of electrodes 5, 6 are circles of 5.0 Ø (mm) each.

The characteristics of the devices thus obtained are shown in TABLE 8.

TABLE 8

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | Cao | $V_1$ mA/mm (V) | $\alpha$ | $\varepsilon$ | tan $\delta$ (%) |
| 1* | 9 9.9 4 5 | 0.0 5 0 | 0 | 0.0 0 5 | 1 0 0 | 1. 0 | $4.0 \times 10^3$ | 4 1. 6 |
| 2* | 9 9.7 5 0 | 0.0 5 0 | 0 | 0.2 0 0 | 8 8 | 1. 2 | $4.0 \times 10^3$ | 3 3.7 |
| 3* | 9 8.9 5 0 | 0.0 5 0 | 0 | 1.0 0 0 | 8 4 | 1. 4 | $5.0 \times 10^3$ | 3 1. 9 |
| 4* | 8 9.9 5 0 | 0.0 5 0 | 0 | 1 0.0 0 0 | 7 5 | 1. 7 | $9.0 \times 10^3$ | 2 7. 4 |
| 5* | 9 9.9 4 5. | 0.0 5 0 | 0.0 0 5 | 0 | 4 1 | 3. 2 | $6.0 \times 10^3$ | 9. 8 |
| 6 | 9 9.9 4 0 | 0.0 5 0 | 0.0 0 5 | 0.0 0 5 | 7 0 | 6. 4 | $1.0 \times 10^4$ | 5. 3 |
| 7 | 9 9.7 4 5 | 0.0 5 0 | 0.0 0 5 | 0.2 0 0 | 6 1 | 9. 0 | $1.8 \times 10^4$ | 3. 3 |
| 8 | 9 8.9 4 5 | 0.0 5 0 | 0.0 0 5 | 1.0 0 0 | 4 8 | 1 1.7 | $2.1 \times 10^4$ | 2. 7 |
| 9 | 8 9.9 4 5 | 0.0 5 0 | 0.0 0 5 | 1 0.0 0 0 | 4 3 | 1 2.0 | $2.3 \times 10^4$ | 3. 9 |
| 10* | 8 4.9 4 5 | 0.0 5 0 | 0.0 0 5 | 1 5.0 0 0 | 4 0 | 1 1.5 | $2.5 \times 10^4$ | 8. 4 |
| 11* | 9 9.7 5 0 | 0.0 5 0 | 0.2 0 0 | 0 | 3 6 | 5. 1 | $7.0 \times 10^3$ | 6. 7 |
| 12 | 9 9.7 4 5 | 0.0 5 0 | 0.2 0 0 | 0.0 0 5 | 6 8 | 7. 7 | $1.1 \times 10^4$ | 2. 4 |
| 13 | 9 9.5 5 0 | 0.0 5 0 | 0.2 0 0 | 0.2 0 0 | 6 5 | 1 0.2 | $1.7 \times 10^4$ | 2. 3 |
| 14 | 9 8.7 5 0 | 0.0 5 0 | 0.2 0 0 | 1.0 0 0 | 6 1 | 1 1.3 | $2.4 \times 10^4$ | 2. 5 |
| 15 | 8 9.7 5 0 | 0.0 5 0 | 0.2 0 0 | 1 0.0 0 0 | 6 1 | 1 2.4 | $2.9 \times 10^4$ | 2. 6 |

EP 0 137 044 B1

| | | | | | | | |
|---|---|---|---|---|---|---|---|
| 16* | 84.750 | 0.050 | 0.200 | 15.000 | 60 | 11.5 | $2.6 \times 10^4$ | 8.7 |
| 17* | 98.950 | 0.050 | 1.000 | 0 | 33 | 6.0 | $8.0 \times 10^3$ | 8.0 |
| 18 | 98.945 | 0.050 | 1.000 | 0.005 | 65 | 8.2 | $1.0 \times 10^4$ | 2.8 |
| 19 | 98.750 | 0.050 | 1.000 | 0.200 | 57 | 10.8 | $1.6 \times 10^4$ | 2.4 |
| 20 | 97.950 | 0.050 | 1.000 | 1.000 | 49 | 11.2 | $2.1 \times 10^4$ | 2.6 |
| 21 | 88.950 | 0.050 | 1.000 | 10.000 | 45 | 12.1 | $2.8 \times 10^4$ | 3.3 |
| 22* | 83.950 | 0.050 | 1.000 | 15.000 | 54 | 11.6 | $2.4 \times 10^4$ | 10.4 |
| 23* | 89.950 | 0.050 | 10.000 | 0 | 42 | 6.4 | $5.0 \times 10^3$ | 9.4 |
| 24 | 89.945 | 0.050 | 10.000 | 0.005 | 64 | 8.5 | $1.0 \times 10^4$ | 3.0 |
| 25 | 89.750 | 0.050 | 10.000 | 0.200 | 59 | 9.9 | $1.7 \times 10^4$ | 2.4 |
| 26 | 88.950 | 0.050 | 10.000 | 1.000 | 48 | 11.0 | $2.0 \times 10^4$ | 2.7 |
| 27 | 79.950 | 0.050 | 10.000 | 10.000 | 60 | 12.4 | $2.9 \times 10^4$ | 3.9 |
| 28* | 74.950 | 0.050 | 10.000 | 15.000 | 64 | 10.2 | $2.7 \times 10^4$ | 10.7 |
| 29* | 84.950 | 0.050 | 15.000 | 0 | 85 | 5.0 | $7.0 \times 10^3$ | 10.5 |
| 30* | 84.945 | 0.050 | 15.000 | 0.005 | 83 | 8.6 | $8.0 \times 10^3$ | 8.2 |
| 31* | 83.750 | 0.050 | 15.000 | 0.200 | 77 | 10.8 | $9.0 \times 10^3$ | 9.9 |
| 32* | 83.950 | 0.050 | 15.000 | 1.000 | 79 | 9.8 | $9.0 \times 10^3$ | 10.3 |
| 33* | 74.950 | 0.050 | 15.000 | 10.000 | 94 | 8.1 | $8.0 \times 10^3$ | 15.9 |
| 34* | 69.950 | 0.050 | 15.000 | 15.000 | 128 | 5.4 | $5.0 \times 10^3$ | 19.1 |

* ······ Comparison sample

EXAMPLE 9

SrTiO₃, a very small amount of Nb₂O₅ which was existing from the initial stage of the material (contents of $Nb_2O_5$ of the material used in the present example was 0.050 mol %), $Dy_2O_3$ as a metal oxide for accelerating semiconductorization and $CeO_2$ as an element to improve non-linearity are mixed, formed, reduced, fired and oxidated in a similar operation as that of the above-mentioned EXAMPLE 8. Results obtained by measuring the characteristics of the devices thus obtained under similar conditions as in the above-mentioned examples are shown in TABLE 9.

TABLE 9

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | $CeO_2$ | $V_1$ mA/mm (V) | $\alpha$ | $\epsilon$ | tan $\delta$ (%) |
| 101* | 9 9.9 4 5 | 0.0 5 0 | 0 | 0.0 0 5 | 9 8 | 1.0 | $4.0 \times 10^3$ | 4 0.1 |
| 102* | 9 9.7 5 0 | 0.0 5 0 | 0 | 0.2 0 0 | 9 1 | 1.2 | $4.0 \times 10^3$ | 3 7.3 |
| 103* | 9 8.9 5 0 | 0.0 5 0 | 0 | 1.0 0 0 | 8 2 | 1.2 | $5.0 \times 10^3$ | 3 1.5 |
| 104* | 8 9.9 5 0 | 0.0 5 0 | 0 | 1 0.0 0 0 | 7 7 | 1.8 | $7.0 \times 10^3$ | 3 0.9 |
| 105* | 9 9.9 4 5 | 0.0 5 0 | 0.0 0 5 | 0 | 4 1 | 3.2 | $6.0 \times 10^3$ | 9.8 |
| 106 | 9 9.9 4 0 | 0.0 5 0 | 0.0 0 5 | 0.0 0 5 | 7 2 | 6.6 | $1.0 \times 10^4$ | 4.5 |
| 107 | 9 9.7 4 5 | 0.0 5 0 | 0.0 0 5 | 0.2 0 0 | 5 9 | 9.1 | $1.5 \times 10^4$ | 3.1 |
| 108 | 9 8.9 4 5 | 0.0 5 0 | 0.0 0 5 | 1.0 0 0 | 5 4 | 1 0.4 | $1.9 \times 10^4$ | 2.5 |
| 109 | 8 9.9 4 5 | 0.0 5 0 | 0.0 0 5 | 1 0.0 0 0 | 4 2 | 1 2.9 | $2.1 \times 10^4$ | 3.3 |
| 110* | 8 4.9 4 5 | 0.0 5 0 | 0.0 0 5 | 1 5.0 0 0 | 3 5 | 1 2.1 | $2.3 \times 10^4$ | 9.2 |
| 111* | 9 9.7 5 0 | 0.0 5 0 | 0.2 0 0 | 0 | 3 6 | 5.1 | $7.0 \times 10^3$ | 6.7 |
| 112 | 9 9.7 4 5 | 0.0 5 0 | 0.2 0 0 | 0.0 0 5 | 8 2 | 8.3 | $1.2 \times 10^4$ | 2.5 |
| 113 | 9 9.5 5 0 | 0.0 5 0 | 0.2 0 0 | 0.2 0 0 | 6 9 | 1 0.2 | $1.6 \times 10^4$ | 2.3 |
| 114 | 9 8.7 5 0 | 0.0 5 0 | 0.2 0 0 | 1.0 0 0 | 5 6 | 1 1.3 | $1.9 \times 10^4$ | 2.7 |
| 115 | 8 9.7 5 0 | 0.0 5 0 | 0.2 0 0 | 1 0.0 0 0 | 5 5 | 1 2.5 | $2.4 \times 10^4$ | 9.0 |

EP 0 137 044 B1

| | | | | | | | | |
|---|---|---|---|---|---|---|---|---|
| 116* | 84.750 | 0.050 | 0.200 | 15.000 | 47 | 11.6 | $2.5 \times 10^4$ | 8.0 |
| 117* | 98.950 | 0.050 | 1.000 | 0 | 33 | 6.0 | $8.0 \times 10^3$ | 2.4 |
| 118 | 98.945 | 0.050 | 1.000 | 0.005 | 64 | 9.5 | $1.3 \times 10^4$ | 2.3 |
| 119 | 98.750 | 0.050 | 1.000 | 0.200 | 53 | 9.9 | $1.8 \times 10^4$ | 2.3 |
| 120 | 97.950 | 0.050 | 1.000 | 1.000 | 45 | 10.7 | $2.3 \times 10^4$ | 2.3 |
| 121 | 88.950 | 0.050 | 1.000 | 10.000 | 44 | 11.1 | $2.5 \times 10^4$ | 2.9 |
| 122* | 83.950 | 0.050 | 1.000 | 15.000 | 47 | 11.5 | $2.8 \times 10^4$ | 0.1 |
| 123* | 89.950 | 0.050 | 10.000 | 0 | 42 | 6.4 | $5.0 \times 10^3$ | 9.4 |
| 124 | 89.945 | 0.050 | 10.000 | 0.005 | 61 | 10.6 | $1.2 \times 10^4$ | 3.5 |
| 125 | 89.750 | 0.050 | 10.000 | 0.200 | 51 | 11.5 | $1.9 \times 10^4$ | 3.1 |
| 126 | 88.950 | 0.050 | 10.000 | 1.000 | 56 | 10.7 | $2.2 \times 10^4$ | 2.8 |
| 127 | 79.950 | 0.050 | 10.000 | 10.000 | 48 | 10.1 | $2.4 \times 10^4$ | 5.4 |
| 128* | 74.950 | 0.050 | 10.000 | 15.000 | 45 | 9.4 | $2.3 \times 10^4$ | 10.3 |
| 129* | 84.950 | 0.050 | 15.000 | 0 | 85 | 5.0 | $7.0 \times 10^3$ | 10.5 |
| 130* | 84.945 | 0.050 | 15.000 | 0.005 | 60 | 7.7 | $8.0 \times 10^3$ | 7.9 |
| 131* | 84.750 | 0.050 | 15.000 | 0.200 | 59 | 8.0 | $9.0 \times 10^3$ | 8.8 |
| 132* | 83.950 | 0.050 | 15.000 | 1.000 | 57 | 10.7 | $9.0 \times 10^3$ | 10.0 |
| 133* | 74.950 | 0.050 | 15.000 | 10.000 | 65 | 10.9 | $8.0 \times 10^3$ | 15.8 |
| 134* | 69.950 | 0.050 | 15.000 | 15.000 | 82 | 6.5 | $8.0 \times 10^3$ | 23.1 |

*······ Comparison sample

EXAMPLE 10

SrTiO$_3$, a very small amount of Nb$_2$O$_5$ which was existing from the initial stage of a material (contents of Nb$_2$O$_5$ of the material used in the present example was 0.050 mol %), Dy$_2$O$_3$ as metal oxide for accelerating semiconductorization and ZrO$_2$ as an element to improve non-linearity are mixed, formed, reduced, fired and oxidated in a similar operation as that of the above-mentioned EXAMPLE 8. Results obtained by measuring the characteristics of devices thus obtained under similar conditions as in the above-mentioned examples are shown in TABLE 10.

TABLE 10

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | $ZrO_2$ | $V_1$mA/mm (V) | $\alpha$ | $\epsilon$ | tan δ(%) |
| 1 * | 99.945 | 0.050 | 0 | 0.005 | 103 | 1.0 | $4.0 \times 10^3$ | 39.2 |
| 2 * | 99.750 | 0.050 | 0 | 0.200 | 129 | 1.3 | $4.0 \times 10^3$ | 34.4 |
| 3 * | 98.950 | 0.050 | 0 | 1.000 | 173 | 1.9 | $7.0 \times 10^3$ | 31.5 |
| 4 * | 89.950 | 0.050 | 0 | 10.000 | 198 | 2.0 | $8.0 \times 10^3$ | 24.7 |
| 5 * | 99.945 | 0.050 | 0.005 | 0 | 41 | 3.2 | $6.0 \times 10^3$ | 9.8 |
| 6 | 99.940 | 0.050 | 0.005 | 0.005 | 66 | 6.7 | $9.0 \times 10^3$ | 5.4 |
| 7 | 99.745 | 0.050 | 0.005 | 0.200 | 73 | 9.3 | $1.1 \times 10^4$ | 2.9 |
| 8 | 98.945 | 0.050 | 0.005 | 1.000 | 80 | 10.3 | $1.5 \times 10^4$ | 2.7 |
| 9 | 89.945 | 0.050 | 0.005 | 10.000 | 88 | 11.0 | $1.7 \times 10^4$ | 2.8 |
| 10 * | 84.945 | 0.050 | 0.005 | 15.000 | 97 | 11.4 | $1.8 \times 10^4$ | 7.4 |
| 11 * | 99.750 | 0.050 | 0.200 | 0 | 36 | 5.1 | $7.0 \times 10^3$ | 6.7 |
| 12 | 99.745 | 0.050 | 0.200 | 0.005 | 76 | 8.2 | $1.3 \times 10^4$ | 3.2 |
| 13 | 99.550 | 0.050 | 0.200 | 0.200 | 71 | 9.9 | $1.7 \times 10^4$ | 2.8 |
| 14 | 98.750 | 0.050 | 0.200 | 1.000 | 69 | 10.0 | $1.9 \times 10^4$ | 2.5 |
| 15 | 89.750 | 0.050 | 0.200 | 10.000 | 78 | 10.7 | $2.5 \times 10^4$ | 2.9 |

EP 0 137 044 B1

| | | | | | | | | |
|---|---|---|---|---|---|---|---|---|
| 16* | 84.750 | 0.050 | 0.200 | 15.000 | 101 | 11.2 | $2.1 \times 10^4$ | 9.2 |
| 17* | 98.950 | 0.050 | 1.000 | 0 | 33 | 6.0 | $8.0 \times 10^3$ | 8.0 |
| 18 | 98.945 | 0.050 | 1.000 | 0.005 | 79 | 9.9 | $1.5 \times 10^4$ | 2.7 |
| 19 | 98.750 | 0.050 | 1.000 | 0.200 | 85 | 10.4 | $1.9 \times 10^4$ | 2.5 |
| 20 | 97.950 | 0.050 | 1.000 | 1.000 | 97 | 11.0 | $2.1 \times 10^4$ | 2.4 |
| 21 | 88.950 | 0.050 | 1.000 | 10.000 | 103 | 12.0 | $2.8 \times 10^4$ | 3.0 |
| 22* | 83.950 | 0.050 | 1.000 | 15.000 | 127 | 11.6 | $2.3 \times 10^4$ | 10.0 |
| 23* | 89.950 | 0.050 | 10.000 | 0 | 42 | 6.4 | $5.0 \times 10^3$ | 9.4 |
| 24 | 89.945 | 0.050 | 10.000 | 0.005 | 110 | 10.4 | $1.8 \times 10^4$ | 3.2 |
| 25 | 89.750 | 0.050 | 10.000 | 0.200 | 115 | 10.9 | $2.0 \times 10^4$ | 2.8 |
| 26 | 88.950 | 0.050 | 10.000 | 1.000 | 119 | 11.8 | $2.1 \times 10^4$ | 3.5 |
| 27 | 79.950 | 0.050 | 10.000 | 10.000 | 160 | 12.3 | $2.6 \times 10^4$ | 4.7 |
| 28* | 74.950 | 0.050 | 10.000 | 15.000 | 191 | 11.0 | $2.0 \times 10^4$ | 11.9 |
| 29* | 84.950 | 0.050 | 15.000 | 0 | 85 | 5.0 | $7.0 \times 10^3$ | 10.5 |
| 30* | 84.945 | 0.050 | 15.000 | 0.005 | 112 | 9.4 | $7.0 \times 10^3$ | 8.0 |
| 31* | 84.750 | 0.050 | 15.000 | 0.200 | 116 | 10.2 | $8.0 \times 10^3$ | 9.2 |
| 32* | 83.950 | 0.050 | 15.000 | 1.000 | 137 | 10.3 | $9.0 \times 10^3$ | 9.7 |
| 33* | 74.950 | 0.050 | 15.000 | 10.000 | 189 | 9.0 | $7.0 \times 10^3$ | 12.6 |
| 34* | 69.950 | 0.050 | 15.000 | 15.000 | 212 | 8.7 | $4.0 \times 10^3$ | 23.4 |

* ······ Comparison sample

EXAMPLE 11

SrTiO$_3$, a very small amount of Nb$_2$O$_5$ which was existing from the initial stage of material (contents of Nb$_2$O$_5$ of the material used in the present example was 0.050 mol %), Dy$_2$O$_3$ as metal oxide for accelerating semiconductorization and NiO as an element to improve non-linearity are mixed, formed, reduced, fired and oxidated in a similar operation as that of the above-mentioned EXAMPLE 8. Results obtained by measuring the characteristics of the devices thus obtained under similar conditions as in the above-mentioned examples are shown in TABLE 11.

TABLE 11

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | NiO | $V_1$ mA/mm (V) | $\alpha$ | $\epsilon$ | tan $\delta$ (%) |
| 1* | 99.945 | 0.050 | 0 | 0.005 | 100 | 1.0 | $4.0 \times 10^3$ | 40.4 |
| 2* | 99.750 | 0.050 | 0 | 0.200 | 92 | 1.2 | $4.0 \times 10^3$ | 35.9 |
| 3* | 98.950 | 0.050 | 0 | 1.000 | 89 | 1.3 | $5.0 \times 10^3$ | 30.2 |
| 4* | 89.950 | 0.050 | 0 | 10.000 | 64 | 1.7 | $7.0 \times 10^3$ | 26.0 |
| 5* | 99.945 | 0.050 | 0.005 | 0 | 41 | 3.2 | $6.0 \times 10^3$ | 9.8 |
| 6 | 99.940 | 0.050 | 0.005 | 0.005 | 80 | 6.1 | $9.0 \times 10^3$ | 6.4 |
| 7 | 99.745 | 0.050 | 0.005 | 0.200 | 62 | 9.4 | $1.0 \times 10^4$ | 3.5 |
| 8 | 98.945 | 0.050 | 0.005 | 1.000 | 46 | 10.2 | $1.4 \times 10^4$ | 2.9 |
| 9 | 89.945 | 0.050 | 0.005 | 10.000 | 31 | 10.3 | $1.6 \times 10^4$ | 3.8 |
| 10* | 84.945 | 0.050 | 0.005 | 15.000 | 35 | 10.7 | $1.9 \times 10^4$ | 8.0 |
| 11* | 99.750 | 0.050 | 0.200 | 0 | 36 | 5.1 | $7.0 \times 10^3$ | 6.7 |
| 12 | 99.745 | 0.050 | 0.200 | 0.005 | 85 | 7.4 | $1.1 \times 10^4$ | 5.4 |
| 13 | 99.550 | 0.050 | 0.200 | 0.200 | 70 | 10.1 | $1.7 \times 10^4$ | 3.8 |
| 14 | 98.750 | 0.050 | 0.200 | 1.000 | 56 | 10.3 | $1.9 \times 10^4$ | 2.6 |
| 15 | 89.750 | 0.050 | 0.200 | 10.000 | 49 | 11.4 | $2.0 \times 10^4$ | 2.7 |

EP 0 137 044 B1

| | | | | | | | |
|---|---|---|---|---|---|---|---|
| 1 6* | 8 4.7 5 0 | 0.0 5 0 | 0.2 0 0 | 1 5.0 0 0 | 4 3 | 1 1.1 | $2.5 \times 10^4$ | 8.8 |
| 1 7* | 9 8.9 5 0 | 0.0 5 0 | 1.0 0 0 | 0 | 3 3 | 6.0 | $8.0 \times 10^3$ | 8.0 |
| 1 8 | 9 8.9 4 5 | 0.0 5 0 | 1.0 0 0 | 0.0 0 5 | 7 1 | 9.1 | $1.9 \times 10^4$ | 5.1 |
| 1 9 | 9 8.7 5 0 | 0.0 5 0 | 1.0 0 0 | 0.2 0 0 | 6 2 | 1 0.7 | $2.0 \times 10^4$ | 3.0 |
| 2 0 | 9 7.9 5 0 | 0.0 5 0 | 1.0 0 0 | 1.0 0 0 | 5 1 | 1 1.1 | $2.5 \times 10^4$ | 2.6 |
| 2 1 | 8 8.9 5 0 | 0.0 5 0 | 1.0 0 0 | 1 0.0 0 0 | 4 7 | 1 2.2 | $2.7 \times 10^4$ | 2.8 |
| 2 2* | 8 3.9 5 0 | 0.0 5 0 | 1.0 0 0 | 1 5.0 0 0 | 4 6 | 1 2.6 | $2.7 \times 10^4$ | 1 0.4 |
| 2 3* | 8 9.9 5 0 | 0.0 5 0 | 1 0.0 0 0 | 0 | 4 2 | 6.4 | $5.0 \times 10^3$ | 9.4 |
| 2 4 | 8 9.9 4 5 | 0.0 5 0 | 1 0.0 0 0 | 0.0 0 5 | 6 4 | 1 0.4 | $1.8 \times 10^4$ | 4.8 |
| 2 5 | 8 9.7 5 0 | 0.0 5 0 | 1 0.0 0 0 | 0.2 0 0 | 6 1 | 1 0.9 | $2.0 \times 10^4$ | 3.0 |
| 2 6 | 8 8.9 5 0 | 0.0 5 0 | 1 0.0 0 0 | 1.0 0 0 | 5 8 | 1 1.0 | $2.2 \times 10^4$ | 2.9 |
| 2 7 | 7 9.9 5 0 | 0.0 5 0 | 1 0.0 0 0 | 1 0.0 0 0 | 5 2 | 1 0.8 | $1.9 \times 10^4$ | 3.6 |
| 2 8* | 7 4.9 5 0 | 0.0 5 0 | 1 0.0 0 0 | 1 5.0 0 0 | 6 0 | 9.2 | $1.5 \times 10^4$ | 1 4.1 |
| 2 9* | 8 4.9 5 0 | 0.0 5 0 | 1 5.0 0 0 | 0 | 8 5 | 5.0 | $7.0 \times 10^3$ | 1 0.5 |
| 3 0* | 8 4.9 4 5 | 0.0 5 0 | 1 5.0 0 0 | 0.0 0 5 | 8 2 | 9.4 | $7.0 \times 10^3$ | 9.1 |
| 3 1* | 8 4.7 5 0 | 0.0 5 0 | 1 5.0 0 0 | 0.2 0 0 | 6 7 | 1 0.3 | $8.0 \times 10^3$ | 8.9 |
| 3 2* | 8 3.9 5 0 | 0.0 5 0 | 1 5.0 0 0 | 1.0 0 0 | 6 4 | 9.1 | $9.0 \times 10^3$ | 9.2 |
| 3 3* | 7 4.9 5 0 | 0.0 5 0 | 1 5.0 0 0 | 1 0.0 0 0 | 7 9 | 8.6 | $7.0 \times 10^3$ | 1 0.8 |
| 3 4* | 6 9.9 5 0 | 0.0 5 0 | 1 5.0 0 0 | 1 5.0 0 0 | 1 3 5 | 6.2 | $7.0 \times 10^3$ | 2 3.1 |

\* ······ Comparison sample

EP 0 137 044 B1

EXAMPLE 12

SrTiO$_3$, a very small amount of Nb$_2$O$_5$ which was existing from the initial stage of material (contents of Nb$_2$O$_5$ of the material used in the present example was 0.050 mol %), Dy$_2$O$_3$ as metal oxide for accelerating semiconductorization and La$_2$O$_3$ as an element to improve non-linearity are mixed, formed, reduced , fired and oxidated in a similar operation as that of the above-mentioned EXAMPLE 8. Results obtained by measuring the characteristics of the devices thus obtained under similar conditions as in the above-mentioned examples are shown in TABLE 12.

TABLE 12

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | $La_2O_3$ | $V_1 mA/mm (V)$ | $\alpha$ | $\varepsilon$ | tan $\delta$ (%) |
| 1* | 99.945 | 0.050 | 0 | 0.005 | 112 | 1.0 | $4.0 \times 10^3$ | 36.4 |
| 2* | 99.750 | 0.050 | 0 | 0.200 | 127 | 1.2 | $4.0 \times 10^3$ | 29.8 |
| 3* | 98.950 | 0.050 | 0 | 1.000 | 196 | 1.4 | $7.0 \times 10^3$ | 23.1 |
| 4* | 89.950 | 0.050 | 0 | 10.000 | 245 | 1.9 | $9.0 \times 10^3$ | 9.8 |
| 5* | 99.945 | 0.050 | 0.005 | 0 | 41 | 3.2 | $6.0 \times 10^3$ | 4.4 |
| 6 | 99.940 | 0.050 | 0.005 | 0.005 | 95 | 7.1 | $8.0 \times 10^3$ | 3.0 |
| 7 | 99.745 | 0.050 | 0.005 | 0.200 | 83 | 9.4 | $1.0 \times 10^4$ | 2.5 |
| 8 | 98.945 | 0.050 | 0.005 | 1.000 | 74 | 10.8 | $1.4 \times 10^4$ | 2.3 |
| 9 | 89.945 | 0.050 | 0.005 | 10.000 | 82 | 11.1 | $1.5 \times 10^4$ | 5.9 |
| 10* | 84.945 | 0.050 | 0.005 | 15.000 | 90 | 10.5 | $1.8 \times 10^4$ | 6.7 |
| 11* | 99.750 | 0.050 | 0.200 | 0 | 36 | 5.1 | $7.0 \times 10^3$ | 2.8 |
| 12 | 99.745 | 0.050 | 0.200 | 0.005 | 107 | 8.0 | $1.0 \times 10^4$ | 2.6 |
| 13 | 99.550 | 0.050 | 0.200 | 0.200 | 85 | 10.2 | $1.5 \times 10^4$ | 2.5 |
| 14 | 98.750 | 0.050 | 0.200 | 1.000 | 78 | 11.3 | $1.8 \times 10^4$ | 2.7 |
| 15 | 89.750 | 0.050 | 0.200 | 10.000 | 71 | 12.7 | $2.1 \times 10^4$ | 3.9 |

EP 0 137 044 B1

| | | | | | | | |
|---|---|---|---|---|---|---|---|
| 16* | 84.750 | 0.050 | 0.200 | 15.00 | 84 | 11.7 | $2.0 \times 10^4$ | 8.0 |
| 17* | 98.950 | 0.050 | 1.000 | 0 | 33 | 6.0 | $8.0 \times 10^3$ | 3.0 |
| 18 | 98.945 | 0.050 | 1.000 | 0.05 | 89 | 9.3 | $1.0 \times 10^4$ | 2.8 |
| 19 | 98.750 | 0.050 | 1.000 | 0.20 | 88 | 10.1 | $1.7 \times 10^4$ | 2.5 |
| 20 | 97.950 | 0.050 | 1.000 | 1.00 | 100 | 11.0 | $2.0 \times 10^4$ | 2.5 |
| 21 | 88.950 | 0.050 | 1.000 | 10.00 | 114 | 11.3 | $2.1 \times 10^4$ | 3.4 |
| 22* | 83.950 | 0.050 | 1.000 | 15.00 | 143 | 10.5 | $1.9 \times 10^4$ | 9.9 |
| 23* | 89.950 | 0.050 | 10.000 | 0 | 42 | 6.4 | $5.0 \times 10^3$ | 9.4 |
| 24 | 89.945 | 0.050 | 10.000 | 0.05 | 109 | 9.6 | $1.7 \times 10^4$ | 3.5 |
| 25 | 89.750 | 0.050 | 10.000 | 0.20 | 117 | 10.3 | $1.9 \times 10^4$ | 3.4 |
| 26 | 88.950 | 0.050 | 10.000 | 1.00 | 119 | 11.1 | $2.1 \times 10^4$ | 3.0 |
| 27 | 79.950 | 0.050 | 10.000 | 10.00 | 161 | 11.4 | $2.3 \times 10^4$ | 4.9 |
| 28* | 74.950 | 0.050 | 10.000 | 15.00 | 184 | 8.0 | $2.0 \times 10^4$ | 10.8 |
| 29* | 84.950 | 0.050 | 15.000 | 0 | 85 | 5.0 | $7.0 \times 10^3$ | 10.5 |
| 30* | 84.945 | 0.050 | 15.000 | 0.05 | 115 | 8.2 | $8.0 \times 10^3$ | 8.2 |
| 31* | 84.750 | 0.050 | 15.000 | 0.20 | 124 | 8.7 | $8.0 \times 10^3$ | 9.5 |
| 32* | 83.950 | 0.050 | 15.000 | 1.00 | 185 | 7.6 | $9.0 \times 10^3$ | 13.0 |
| 33* | 74.950 | 0.050 | 15.000 | 10.00 | 199 | 6.2 | $7.0 \times 10^3$ | 23.7 |
| 34* | 69.950 | 0.050 | 15.000 | 15.00 | 231 | 4.3 | $4.0 \times 10^3$ | 30.5 |

* ..... Comparison sample

EXAMPLE 13

SrTiO$_3$, a very small amount of Nb$_2$O$_5$ which was existing from the initial stage of material (contents of Nb$_2$O$_5$ of the material used in the present example was 0.050 mol %), Dy$_2$O$_3$ as metal oxide for accelerating semiconductorization and Y$_2$O$_3$ as an element to improve non-linearity are mixed, formed, reduced, fired and oxidated in a similar operation as that of the above-mentioned EXAMPLE 8. Results obtained by measuring the characteristics of the devices thus obtained under similar conditions as in the above-mentioned examples are shown in TABLE 13.

TABLE 13

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | $Y_2O_3$ | $V_1$ mA/mm (V) | $\alpha$ | $\varepsilon$ | tan ô (%) |
| 1* | 99.945 | 0.050 | 0 | 0.005 | 95 | 1.0 | $4.0 \times 10^3$ | 44.3 |
| 2* | 99.750 | 0.050 | 0 | 0.200 | 121 | 1.1 | $4.0 \times 10^3$ | 39.8 |
| 3* | 98.950 | 0.050 | 0 | 1.000 | 174 | 1.7 | $7.0 \times 10^3$ | 30.1 |
| 4* | 89.950 | 0.050 | 0 | 10.000 | 190 | 2.0 | $8.0 \times 10^3$ | 29.0 |
| 5* | 99.945 | 0.050 | 0.005 | 0 | 41 | 3.2 | $6.0 \times 10^3$ | 9.8 |
| 6 | 99.940 | 0.050 | 0.005 | 0.005 | 80 | 6.9 | $1.0 \times 10^4$ | 5.3 |
| 7 | 99.745 | 0.050 | 0.005 | 0.200 | 73 | 10.5 | $1.5 \times 10^4$ | 3.0 |
| 8 | 98.945 | 0.050 | 0.005 | 1.000 | 79 | 11.7 | $1.9 \times 10^4$ | 2.9 |
| 9 | 89.945 | 0.050 | 0.005 | 10.000 | 88 | 12.1 | $2.0 \times 10^4$ | 3.4 |
| 10* | 84.945 | 0.050 | 0.005 | 15.000 | 96 | 11.0 | $2.1 \times 10^4$ | 7.6 |
| 11* | 99.750 | 0.050 | 0.200 | 0 | 36 | 5.1 | $7.0 \times 10^3$ | 6.7 |
| 12 | 99.745 | 0.050 | 0.200 | 0.005 | 87 | 7.4 | $1.4 \times 10^4$ | 3.5 |
| 13 | 99.550 | 0.050 | 0.200 | 0.200 | 72 | 10.9 | $2.0 \times 10^4$ | 2.8 |
| 14 | 98.750 | 0.050 | 0.200 | 1.000 | 68 | 11.4 | $2.3 \times 10^4$ | 2.5 |
| 15 | 89.750 | 0.050 | 0.200 | 10.000 | 71 | 12.8 | $2.5 \times 10^4$ | 2.9 |

EP 0 137 044 B1

| | | | | | | | | |
|---|---|---|---|---|---|---|---|---|
| 16 * | 84.750 | 0.050 | 0.200 | 15.000 | 85 | 11.1 | $2.4 \times 10^4$ | 8.3 |
| 17 * | 98.950 | 0.050 | 1.000 | 0 | 33 | 6.0 | $8.0 \times 10^3$ | 8.0 |
| 18 | 98.945 | 0.050 | 1.000 | 0.005 | 78 | 9.7 | $1.6 \times 10^4$ | 3.4 |
| 19 | 98.750 | 0.050 | 1.000 | 0.200 | 84 | 10.2 | $2.2 \times 10^4$ | 3.1 |
| 20 | 97.950 | 0.050 | 1.000 | 1.000 | 97 | 11.7 | $2.5 \times 10^4$ | 2.6 |
| 21 | 88.950 | 0.050 | 1.000 | 10.000 | 104 | 12.8 | $2.5 \times 10^4$ | 3.1 |
| 22 * | 83.950 | 0.050 | 1.000 | 15.000 | 128 | 11.5 | $1.4 \times 10^4$ | 8.9 |
| 23 * | 89.950 | 0.050 | 10.000 | 0 | 42 | 6.4 | $5.0 \times 10^3$ | 9.4 |
| 24 | 89.945 | 0.050 | 10.000 | 0.005 | 109 | 10.6 | $1.6 \times 10^4$ | 3.5 |
| 25 | 89.750 | 0.050 | 10.000 | 0.200 | 117 | 11.2 | $2.0 \times 10^4$ | 2.9 |
| 26 | 88.950 | 0.050 | 10.000 | 1.000 | 119 | 11.1 | $2.2 \times 10^4$ | 3.1 |
| 27 | 79.950 | 0.050 | 10.000 | 10.000 | 135 | 10.3 | $2.2 \times 10^4$ | 3.9 |
| 28 * | 74.950 | 0.050 | 10.000 | 15.000 | 178 | 10.0 | $2.1 \times 10^4$ | 9.8 |
| 29 * | 84.950 | 0.050 | 15.000 | 0 | 85 | 5.0 | $7.0 \times 10^3$ | 10.5 |
| 30 * | 84.955 | 0.050 | 15.000 | 0.005 | 130 | 6.7 | $9.0 \times 10^3$ | 7.2 |
| 31 * | 84.750 | 0.050 | 15.000 | 0.200 | 135 | 8.2 | $9.0 \times 10^3$ | 8.5 |
| 32 * | 83.950 | 0.050 | 15.000 | 1.000 | 159 | 9.0 | $7.0 \times 10^3$ | 10.4 |
| 33 * | 74.950 | 0.050 | 15.000 | 10.000 | 198 | 7.0 | $5.0 \times 10^3$ | 14.5 |
| 34 * | 69.950 | 0.050 | 15.000 | 15.000 | 221 | 6.1 | $5.0 \times 10^3$ | 23.2 |

*······· Comparison sample

EP 0 137 044 B1

EXAMPLE 14

SrTiO$_3$, a very small amount of Nb$_2$O$_5$ which was existing from the initial stage of the material (contents of Nb$_2$O$_5$ of the material used in the present example was 0.050 mol %), Dy$_2$O$_3$ as metal oxide for accelerating semiconductorization and Gd$_2$O$_3$ as an element to improve non-linearity are mixed, formed, reduced, fired and oxidated in a similar operation as that of the above-mentioned EXAMPLE 8. Results obtained by measuring the characteristics of the devices thus obtained under similar conditions as that in the above-mentioned examples are shown in TABLE 14.

40

TABLE 14

| Sample No. | Composition ratio (mol %) | | | | Characteristics | | | |
|---|---|---|---|---|---|---|---|---|
| | $SrTiO_3$ | $Nb_2O_5$ | $Dy_2O_3$ | $Gd_2O_3$ | $V_1$ mA/mm (V) | $\alpha$ | $\epsilon$ | tan $\delta$ (%) |
| 1* | 99.945 | 0.050 | 0 | 0.005 | 110 | 1.0 | $4.0 \times 10^3$ | 45.6 |
| 2* | 99.750 | 0.050 | 0 | 0.200 | 116 | 1.2 | $4.0 \times 10^3$ | 40.1 |
| 3* | 98.950 | 0.050 | 0 | 1.000 | 184 | 1.3 | $6.0 \times 10^3$ | 32.3 |
| 4* | 89.950 | 0.050 | 0 | 10.000 | 221 | 1.6 | $8.0 \times 10^3$ | 27.0 |
| 5* | 99.945 | 0.050 | 0.005 | 0 | 41 | 3.2 | $6.0 \times 10^3$ | 9.8 |
| 6 | 99.940 | 0.050 | 0.005 | 0.005 | 92 | 6.8 | $7.0 \times 10^3$ | 5.3 |
| 7 | 99.745 | 0.050 | 0.005 | 0.200 | 81 | 8.2 | $1.0 \times 10^4$ | 4.0 |
| 8 | 98.945 | 0.050 | 0.005 | 1.000 | 74 | 10.2 | $1.4 \times 10^4$ | 3.5 |
| 9 | 89.945 | 0.050 | 0.005 | 10.000 | 83 | 11.3 | $1.8 \times 10^4$ | 3.6 |
| 10* | 84.945 | 0.050 | 0.005 | 15.000 | 92 | 10.9 | $1.9 \times 10^4$ | 4.9 |
| 11* | 99.750 | 0.050 | 0.200 | 0 | 36 | 5.1 | $7.0 \times 10^3$ | 6.7 |
| 12 | 99.745 | 0.050 | 0.200 | 0.005 | 105 | 7.4 | $9.0 \times 10^3$ | 4.2 |
| 13 | 99.550 | 0.050 | 0.200 | 0.200 | 81 | 9.7 | $1.1 \times 10^4$ | 2.8 |
| 14 | 98.750 | 0.050 | 0.200 | 1.000 | 77 | 10.3 | $1.2 \times 10^4$ | 2.5 |
| 15 | 89.750 | 0.050 | 0.200 | 10.000 | 70 | 11.7 | $1.7 \times 10^4$ | 2.7 |

EP 0 137 044 B1

| | | | | | | | |
|---|---|---|---|---|---|---|---|
| 16 * | 8 4.7 5 0 | 0.0 5 0 | 0.2 0 0 | 1 5.0 0 0 | 8 3 | 1 1.5 | $2.1 \times 10^4$ | 4.8 |
| 17 * | 9 8.9 5 0 | 0.0 5 0 | 1.0 0 0 | 0 | 3 3 | 6.0 | $8.0 \times 10^3$ | 8.0 |
| 18 | 9 8.9 4 5 | 0.0 5 0 | 1.0 0 0 | 0.0 0 5 | 8 7 | 8.5 | $1.4 \times 10^4$ | 3.6 |
| 19 | 9 8.7 5 0 | 0.0 5 0 | 1.0 0 0 | 0.2 0 0 | 8 3 | 1 0.3 | $1.8 \times 10^4$ | 3.4 |
| 20 | 9 7.9 5 0 | 0.0 5 0 | 1.0 0 0 | 1.0 0 0 | 9 1 | 1 1.4 | $2.0 \times 10^4$ | 3.1 |
| 21 | 8 8.9 5 0 | 0.0 5 0 | 1.0 0 0 | 1 0.0 0 0 | 1 1 3 | 1 1.5 | $2.3 \times 10^4$ | 3.0 |
| 22 * | 8 3.9 5 0 | 0.0 5 0 | 1.0 0 0 | 1 5.0 0 0 | 1 3 2 | 1 2.0 | $1.1 \times 10^4$ | 9.0 |
| 23 * | 8 9.9 5 0 | 0.0 5 0 | 1 0.0 0 0 | 0 | 4 2 | 6.4 | $5.0 \times 10^3$ | 9.4 |
| 24 | 8 9.9 4 5 | 0.0 5 0 | 1 0.0 0 0 | 0.0 0 5 | 1 1 0 | 9.8 | $1.6 \times 10^4$ | 3.5 |
| 25 | 8 9.7 5 0 | 0.0 5 0 | 1 0.0 0 0 | 0.2 0 0 | 1 1 3 | 1 0.4 | $1.8 \times 10^4$ | 3.1 |
| 26 | 8 8.9 5 0 | 0.0 5 0 | 1 0.0 0 0 | 1.0 0 0 | 1 1 7 | 1 0.9 | $2.1 \times 10^4$ | 3.0 |
| 27 | 7 9.9 5 0 | 0.0 5 0 | 1 0.0 0 0 | 1 0.0 0 0 | 1 3 4 | 1 1.2 | $2.2 \times 10^4$ | 4.8 |
| 28 * | 7 4.9 5 0 | 0.0 5 0 | 1 0.0 0 0 | 1 5.0 0 0 | 1 7 4 | 1 2.1 | $2.3 \times 10^4$ | 1 0.5 |
| 29 * | 8 4.9 5 0 | 0.0 5 0 | 1 5.0 0 0 | 0 | 8 5 | 5.0 | $7.0 \times 10^3$ | 1 0.5 |
| 30 * | 8 4.9 4 5 | 0.0 5 0 | 1 5.0 0 0 | 0.0 0 5 | 1 2 4 | 9.0 | $8.0 \times 10^3$ | 9.5 |
| 31 * | 8 4.7 5 0 | 0.0 5 0 | 1 5.0 0 0 | 0.2 0 0 | 1 2 9 | 8.2 | $9.0 \times 10^3$ | 1 0.2 |
| 32 * | 8 3.9 5 0 | 0.0 5 0 | 1 5.0 0 0 | 1.0 0 0 | 1 5 9 | 8.1 | $1.0 \times 10^4$ | 1 3.8 |
| 33 * | 7 4.9 5 0 | 0.0 5 0 | 1 5.0 0 0 | 1 0.0 0 0 | 2 1 0 | 8.0 | $6.0 \times 10^3$ | 2 4.7 |
| 34 * | 6 9.9 5 0 | 0.0 5 0 | 1 5.0 0 0 | 1 5.0 0 0 | 2 6 1 | 6.5 | $4.0 \times 10^3$ | 3 5.0 |

\* ······ Comparison sample

As shown by EXAMPLES 9 through 15, in a case where $Dy_2O_3$ is added in amounts of 0.005 - 10.000 mol % together with a small amount of $Nb_2O_5$, this contributes to reduce the specific resistance of the reduced fired body, and by refiring in air it shows varistor characteristics.

Herein, the amount of $Nb_2O_5$ is that of an impurity naturally included in the starting material $TiO_2$, and its concentration is in a range of 0.001 - 0.200 mol % (result of analysis).

The effect of $Dy_2O_3$ for semiconductorization of $SrTiO_3$ is not damaged even in the case when $Nb_2O_5$ is present at the same time. Accordingly, even when $Dy_2O_3$ and $Nb_2O_5$ are used at the same time as accelerating agent for semiconductorization, it is possible to produce the varistor characteristics.

However, in the case when only $Dy_2O_3$ and $Nb_2O_5$ are added, the electric barrier formed at the grain boundaries is low, and the varistor characteristics are relatively small.

However, when an additive such as $CaO$, $CeO_2$, $ZrO_2$, $NiO$, $La_2O_3$, $Y_2O_3$, $Gd_2O_3$ or the like is added, the added substance is segregated at the crystal granule boundaries during the reducing firing, and by re-firing in air these additives contribute to give the crystal grain boundaries a high resistance, and the varistor characteristics become greater.

Besides, since only the crystal grain boundaries are given high resistance, the capacitance characteristic is present between crystal grain-crystal grain boundary-crystal grain.

Accordingly, by adding $Dy_2O_3$, $Nb_2O_5$ and such additives as $CaO$, $CeO_2$, $ZrO_2$, $NiO$, $La_2O_3$, $Y_2O_3$ or $Gd_2O_3$ to $SrTiO_3$, it is possible to provide characteristics combining the varistor characteristics and the capacitance characteristics.

Though in the above-mentioned EXAMPLEs 8 - 14 only one other additive was added besides $Dy_2O_3$ and $Nb_2O_5$, it was confirmed that the same effect was obtained even when two kinds or more of oxides of elements of the group consisting of K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf and Ru were used in a manner that the total amount is within the above-mentioned range.

By using elements 7 made by providing electrodes of conductive material such as Ag on the sintered body obtained as above and a coil B, a noise filter shown in FIG.4 is constituted, and by impressing a noise input A shown in FIG.5 thereon, a noise output B was obtained.

As is obvious from this, the noise is satisfactorily eliminated, and besides, the number of components is decreased by the combination of the element unit and the coil, enabling this miniaturization.

EXAMPLE 15

$SrTiO_3$, $Ta_2O_5$ and $CdO$ are used in amounts to give the composition ratios shown in the below-mentioned TABLE 15, they were mixed by a wet method in a ball mill or the like for 6 hours, dried and thereafter calcinated at 1000-1250°C in air for 1-5 hours. Thereafter the mixture was ground by a wet method in a ball mill or the like for 4 hours, dried, subsequently granulated by adding 8 wt % of an organic binder (for instance, polyvinylalcohol)and press-formed into the shape of a disc of 8.0 (mm) Ø x 1.0 (mm)t with a forming pressure of about 1.0 t/cm$^2$ . The formed body was fired for 1-6 hours in a reducing atmosphere (for instance, $N_2 : H_2 = 10 : 1$) at 1300-1450°C. The specific resistance of the fired body thus obtained was averagely 0.1-0.8 Ω.cm, and the average granule size was 20-50 μm. The above-mentioned fired body was then baked in air for 0.5-5 hours at 1000-1300°C to obtain a sintered body 4 of FIG. 3. Both faces of the above-mentioned sintered body 4 were ground by using an abrasive such as SiC, and electrodes 5, 6 were formed by using a conductive metal such as Ag thereon.

The electrodes 5, 6 are circles of 5.0 (mm)Ø each.

The characteristics of the devices thus obtained are shown in TABLE 15. With respect to assessments of the varistor elements thus obtained, they were made under the same conditions as in EXAMPLE 1.

TABLE 15

| Sample No. | Composition ratio (mol %) | | | Characteristics | | | |
|---|---|---|---|---|---|---|---|
| | $SrTiO_3$ | $Ta_2O_5$ | CdO | $V_1mA(V/mm)$ | $\alpha$ | $\varepsilon$ | tan $\delta$(%) |
| 1* | 9 9.9 9 5 | 0 | 0.0 0 5 | 8 0 | 1.0 | $4.0 \times 10^3$ | 3 5.2 |
| 2* | 9 9.8 0 0 | 0 | 0.2 0 0 | 8 5 | 1.3 | $4.0 \times 10^3$ | 3 6.3 |
| 3* | 9 9.0 0 0 | 0 | 1.0 0 0 | 1 0 1 | 1.6 | $5.0 \times 10^3$ | 4 3.1 |
| 4* | 9 0.0 0 0 | 0 | 1 0.0 0 0 | 1 7 4 | 2.0 | $7.0 \times 10^3$ | 5 7.6 |
| 5* | 9 9.9 9 5 | 0.0 0 5 | 0 | 7 8 | 3.3 | $5.0 \times 10^3$ | 8.6 |
| 6 | 9 9.9 9 0 | 0.0 0 5 | 0.0 0 5 | 6 0 | 8.8 | $7.0 \times 10^3$ | 6.5 |
| 7 | 9 9.7 9 5 | 0.0 0 5 | 0.2 0 0 | 5 1 | 9.9 | $1.4 \times 10^4$ | 3.7 |
| 8 | 9 8.9 9 5 | 0.0 0 5 | 1.0 0 0 | 5 7 | 1 1.6 | $1.7 \times 10^4$ | 4.2 |
| 9 | 8 9.9 9 5 | 0.0 0 5 | 1 0.0 0 0 | 6 0 | 1 3.9 | $1.9 \times 10^4$ | 4.5 |
| 1 0* | 8 4.9 9 5 | 0.0 0 5 | 1 5.0 0 0 | 7 3 | 1 2.5 | $1.4 \times 10^4$ | 9.7 |
| 1 1* | 9 9.8 0 0 | 0.2 0 0 | 0 | 7 2 | 4.3 | $7.0 \times 10^3$ | 5.1 |
| 1 2 | 9 9.7 9 5 | 0.2 0 0 | 0.0 0 5 | 5 3 | 9.5 | $1.2 \times 10^4$ | 2.2 |
| 1 3 | 9 9.6 0 0 | 0.2 0 0 | 0.2 0 0 | 3 9 | 1 1.3 | $1.9 \times 10^4$ | 2.7 |
| 1 4 | 9 8.8 0 0 | 0.2 0 0 | 1.0 0 0 | 4 3 | 1 4.3 | $2.0 \times 10^4$ | 3.2 |
| 1 5 | 8 9.8 0 0 | 0.2 0 0 | 1 0.0 0 0 | 5 4 | 1 5.1 | $1.8 \times 10^4$ | 4.4 |

EP 0 137 044 B1

44

| No. | SrTiO₃ | Ta₂O₅ | BaO | | | | |
|---|---|---|---|---|---|---|---|
| 16* | 84.800 | 0.200 | 15.000 | 75 | 15.0 | $1.2 \times 10^4$ | 9.5 |
| 17* | 99.000 | 1.000 | 0 | 69 | 5.5 | $9.0 \times 10^3$ | 7.0 |
| 18 | 98.995 | 1.000 | 0.005 | 41 | 11.9 | $2.3 \times 10^4$ | 2.6 |
| 19 | 98.800 | 1.000 | 0.200 | 32 | 14.2 | $2.8 \times 10^4$ | 3.8 |
| 20 | 98.000 | 1.000 | 1.000 | 39 | 18.4 | $2.4 \times 10^4$ | 3.7 |
| 21 | 89.000 | 1.000 | 10.000 | 48 | 19.0 | $1.8 \times 10^4$ | 4.4 |
| 22* | 84.000 | 1.000 | 15.000 | 77 | 19.5 | $1.7 \times 10^4$ | 10.8 |
| 23* | 90.000 | 10.000 | 0 | 61 | 6.3 | $9.0 \times 10^3$ | 8.4 |
| 24 | 89.995 | 10.000 | 0.005 | 40 | 13.0 | $1.7 \times 10^4$ | 3.4 |
| 25 | 89.800 | 10.000 | 0.200 | 31 | 14.9 | $2.3 \times 10^4$ | 3.7 |
| 26 | 89.000 | 10.000 | 1.000 | 42 | 16.9 | $1.9 \times 10^4$ | 4.4 |
| 27 | 80.000 | 10.000 | 10.000 | 56 | 18.1 | $1.8 \times 10^4$ | 4.2 |
| 28* | 75.000 | 10.000 | 15.000 | 97 | 17.8 | $1.5 \times 10^4$ | 12.9 |
| 29* | 85.000 | 15.000 | 0 | 74 | 6.6 | $7.0 \times 10^3$ | 9.7 |
| 30* | 84.995 | 15.000 | 0.005 | 62 | 12.0 | $1.2 \times 10^4$ | 6.3 |
| 31* | 84.800 | 15.000 | 0.200 | 60 | 13.2 | $1.2 \times 10^4$ | 7.2 |
| 32* | 84.000 | 15.000 | 1.000 | 69 | 15.8 | $9.0 \times 10^3$ | 10.6 |
| 33* | 75.000 | 15.000 | 10.000 | 82 | 13.6 | $6.0 \times 10^3$ | 14.6 |
| 34* | 70.000 | 15.000 | 15.000 | 124 | 8.8 | $4.0 \times 10^3$ | 22.7 |

*······ Comparison sample

## EXAMPLE 16

SrTiO₃, Ta₂O₅ and BaO are used in composition ratios as shown in Table 16 and mixing, forming und firing are carried out in a similar operation as in the above-mentioned EXAMPLE 15 the measurements are made under similar conditions, too, and results are shown in Table 16.

TABLE 16

| Sample No. | Composition ratio (mol %) | | | Characteristics | | | |
|---|---|---|---|---|---|---|---|
| | $SrTiO_3$ | $Ta_2O_5$ | BaO | $V_1$ mA (V/mm) | $\alpha$ | $\varepsilon$ | tan $\delta$ (%) |
| 1* | 99.995 | 0 | 0.005 | 79 | 1.0 | $4.0 \times 10^3$ | 34.4 |
| 2* | 99.800 | 0 | 0.200 | 83 | 1.5 | $4.0 \times 10^3$ | 35.4 |
| 3* | 99.000 | 0 | 1.000 | 100 | 1.7 | $5.0 \times 10^3$ | 41.5 |
| 4* | 90.000 | 0 | 10.000 | 165 | 2.1 | $7.0 \times 10^3$ | 46.3 |
| 5* | 99.995 | 0.005 | 0 | 78 | 3.3 | $5.0 \times 10^3$ | 8.6 |
| 6 | 99.990 | 0.005 | 0.005 | 60 | 8.6 | $7.0 \times 10^3$ | 6.3 |
| 7 | 99.795 | 0.005 | 0.200 | 49 | 9.7 | $1.5 \times 10^4$ | 3.1 |
| 8 | 98.995 | 0.005 | 1.000 | 55 | 10.6 | $1.7 \times 10^4$ | 3.8 |
| 9 | 89.995 | 0.005 | 10.000 | 58 | 12.9 | $2.0 \times 10^4$ | 4.9 |
| 10* | 84.995 | 0.005 | 15.000 | 72 | 12.5 | $1.4 \times 10^4$ | 9.2 |
| 11* | 99.800 | 0.200 | 0 | 72 | 4.3 | $7.0 \times 10^3$ | 5.1 |
| 12 | 99.795 | 0.200 | 0.005 | 53 | 9.3 | $1.6 \times 10^4$ | 2.7 |
| 13 | 99.600 | 0.200 | 0.200 | 37 | 10.3 | $2.4 \times 10^4$ | 2.5 |
| 14 | 98.800 | 0.200 | 1.000 | 43 | 13.3 | $2.5 \times 10^4$ | 2.0 |
| 15 | 89.800 | 0.200 | 10.000 | 51 | 14.1 | $2.0 \times 10^4$ | 3.2 |

EP 0 137 044 B1

| No. | $SrTiO_3$ | $Ta_2O_5$ | $ZrO_2$ | | | | |
|---|---|---|---|---|---|---|---|
| 16* | 84.800 | 0.200 | 15.000 | 70 | 15.8 | $1.8 \times 10^4$ | 8.7 |
| 17* | 99.000 | 1.000 | 0 | 69 | 5.5 | $9.0 \times 10^3$ | 7.0 |
| 18 | 98.995 | 1.000 | 0.005 | 40 | 11.7 | $2.4 \times 10^4$ | 2.8 |
| 19 | 98.800 | 1.000 | 0.200 | 23 | 13.6 | $2.8 \times 10^4$ | 2.7 |
| 20 | 98.000 | 1.000 | 1.000 | 36 | 16.2 | $2.5 \times 10^4$ | 3.8 |
| 21 | 89.000 | 1.000 | 10.000 | 43 | 18.3 | $2.1 \times 10^4$ | 4.1 |
| 22* | 84.000 | 1.000 | 15.000 | 75 | 18.7 | $1.4 \times 10^4$ | 10.5 |
| 23* | 90.000 | 10.000 | 0 | 61 | 6.3 | $9.0 \times 10^3$ | 8.4 |
| 24 | 89.995 | 10.000 | 0.005 | 39 | 13.5 | $1.8 \times 10^4$ | 3.7 |
| 25 | 89.800 | 10.000 | 0.200 | 21 | 15.2 | $2.3 \times 10^4$ | 3.6 |
| 26 | 89.000 | 10.000 | 1.000 | 33 | 17.3 | $2.0 \times 10^4$ | 3.9 |
| 27 | 80.000 | 10.000 | 10.000 | 45 | 20.0 | $1.8 \times 10^4$ | 7.1 |
| 28* | 75.000 | 10.000 | 15.000 | 79 | 19.5 | $1.7 \times 10^4$ | 11.3 |
| 29* | 85.000 | 15.000 | 0 | 74 | 6.6 | $7.0 \times 10^3$ | 9.7 |
| 30* | 84.995 | 15.000 | 0.005 | 51 | 12.5 | $1.2 \times 10^4$ | 5.1 |
| 31* | 84.800 | 15.000 | 0.200 | 50 | 13.7 | $1.3 \times 10^4$ | 5.4 |
| 32* | 84.000 | 15.000 | 1.000 | 54 | 16.7 | $9.0 \times 10^3$ | 6.4 |
| 33* | 75.000 | 15.000 | 10.000 | 79 | 14.5 | $7.0 \times 10^3$ | 8.1 |
| 34* | 70.000 | 15.000 | 15.000 | 112 | 9.6 | $4.0 \times 10^3$ | 15.2 |

* ……… Comparison sample

## EXAMPLE 17

$SrTiO_3$, $Ta_2O_5$ and $ZrO_2$ are used in composition ratios as shown in Table 17 and mixing, forming and firing are carried out in a similar operation as in the above-mentioned EXAMPLE 15 the measurments are made under similar conditions, too, and results are shown in Table 17.

47

TABLE 17

| Sample No. | Composition ratio (mol %) | | | Characteristics | | | |
|---|---|---|---|---|---|---|---|
| | $SrTiO_3$ | $Ta_2O_5$ | $ZrO_2$ | $V_1mA(V/mm)$ | $\alpha$ | $\varepsilon$ | tan $\delta$(%) |
| 1* | 99.995 | 0 | 0.005 | 100 | 1.1 | $4.0 \times 10^3$ | 40.6 |
| 2* | 99.800 | 0 | 0.200 | 126 | 1.8 | $4.0 \times 10^3$ | 35.0 |
| 3* | 99.000 | 0 | 1.000 | 172 | 2.4 | $8.0 \times 10^3$ | 33.8 |
| 4* | 90.000 | 0 | 10.000 | 195 | 2.7 | $8.0 \times 10^3$ | 25.8 |
| 5* | 99.995 | 0.005 | 0 | 78 | 3.3 | $5.0 \times 10^3$ | 8.6 |
| 6 | 99.990 | 0.005 | 0.005 | 63 | 7.0 | $9.0 \times 10^3$ | 5.4 |
| 7 | 99.795 | 0.005 | 0.200 | 52 | 8.2 | $1.8 \times 10^4$ | 2.8 |
| 8 | 98.995 | 0.005 | 1.000 | 61 | 9.9 | $1.9 \times 10^4$ | 3.5 |
| 9 | 89.995 | 0.005 | 10.000 | 67 | 12.4 | $2.1 \times 10^4$ | 4.1 |
| 10* | 84.995 | 0.005 | 15.000 | 88 | 14.5 | $1.3 \times 10^4$ | 8.6 |
| 11 | 99.800 | 0.200 | 0 | 72 | 4.3 | $7.0 \times 10^3$ | 5.1 |
| 12 | 99.795 | 0.200 | 0.005 | 62 | 9.9 | $1.9 \times 10^4$ | 2.7 |
| 13 | 99.600 | 0.200 | 0.200 | 49 | 10.9 | $2.8 \times 10^4$ | 2.5 |
| 14 | 98.800 | 0.200 | 1.000 | 56 | 13.0 | $2.5 \times 10^4$ | 2.9 |
| 15 | 89.800 | 0.200 | 10.000 | 64 | 13.3 | $2.2 \times 10^4$ | 3.3 |

EP 0 137 044 B1

| Sample No. | | | | | | |
|---|---|---|---|---|---|---|
| 16* | 84.800 | 0.200 | 15.000 | 80 | 16.6 | $1.6 \times 10^4$ | 9.5 |
| 17* | 99.000 | 1.000 | 0 | 69 | 5.5 | $9.0 \times 10^3$ | 7.0 |
| 18 | 98.995 | 1.000 | 0.005 | 60 | 12.0 | $2.7 \times 10^4$ | 2.8 |
| 19 | 98.800 | 1.000 | 0.200 | 51 | 14.2 | $2.8 \times 10^4$ | 2.3 |
| 20 | 98.000 | 1.000 | 1.000 | 59 | 16.9 | $2.5 \times 10^4$ | 3.3 |
| 21 | 89.000 | 1.000 | 10.000 | 65 | 18.7 | $2.2 \times 10^4$ | 4.9 |
| 22* | 84.000 | 1.000 | 15.000 | 84 | 18.6 | $1.4 \times 10^4$ | 10.4 |
| 23* | 90.000 | 10.000 | 0 | 61 | 6.3 | $9.0 \times 10^3$ | 8.4 |
| 24 | 89.995 | 10.000 | 0.005 | 54 | 13.7 | $2.0 \times 10^4$ | 3.1 |
| 25 | 89.800 | 10.000 | 0.200 | 50 | 14.4 | $2.6 \times 10^4$ | 2.9 |
| 26 | 89.000 | 10.000 | 1.000 | 61 | 16.8 | $2.4 \times 10^4$ | 3.1 |
| 27 | 80.000 | 10.000 | 10.000 | 74 | 19.9 | $1.8 \times 10^4$ | 6.4 |
| 28* | 75.000 | 10.000 | 15.000 | 105 | 19.4 | $1.5 \times 10^4$ | 11.8 |
| 29* | 85.000 | 15.000 | 0 | 74 | 6.6 | $7.0 \times 10^3$ | 9.7 |
| 30* | 84.995 | 15.000 | 0.005 | 68 | 12.5 | $1.4 \times 10^4$ | 5.9 |
| 31* | 84.800 | 15.000 | 0.200 | 64 | 13.4 | $1.6 \times 10^4$ | 5.8 |
| 32* | 84.000 | 15.000 | 1.000 | 69 | 14.8 | $1.0 \times 10^4$ | 7.2 |
| 33* | 75.000 | 15.000 | 10.000 | 68 | 15.3 | $8.0 \times 10^3$ | 9.7 |
| 34* | 70.000 | 15.000 | 15.000 | 142 | 11.0 | $7.0 \times 10^3$ | 13.1 |

* ...... Comparison sample

## EXAMPLE 18

$SrTiO_3$, $Ta_2O_5$ and $La_2O_3$ are used in composition ratios as shown in Table 18 and mixing, forming and firing are carried out in a similar operation as in the above-mentioned EXAMPLE 15 measurements are made under similar conditions, too, and results are shown in Table 18.

49

TABLE 18

| Sample No. | Composition ratio (mol %) | | | Characteristics | | | |
|---|---|---|---|---|---|---|---|
| | $SrTiO_3$ | $Ta_2O_5$ | $La_2O_3$ | $V_1$ mA (V/mm) | $\alpha$ | $\epsilon$ | tan $\delta$ (%) |
| 1* | 99.995 | 0 | 0.005 | 90 | 1.0 | $4.0 \times 10^3$ | 36.4 |
| 2* | 99.800 | 0 | 0.200 | 96 | 1.3 | $4.0 \times 10^3$ | 39.2 |
| 3* | 99.000 | 0 | 1.000 | 112 | 1.4 | $6.0 \times 10^3$ | 41.5 |
| 4* | 90.000 | 0 | 10.000 | 184 | 1.9 | $8.0 \times 10^3$ | 56.9 |
| 5* | 99.995 | 0.005 | 0 | 78 | 3.3 | $5.0 \times 10^3$ | 8.6 |
| 6 | 99.990 | 0.005 | 0.005 | 70 | 9.1 | $7.0 \times 10^3$ | 5.0 |
| 7 | 99.795 | 0.005 | 0.200 | 57 | 9.3 | $1.0 \times 10^4$ | 3.4 |
| 8 | 98.795 | 0.005 | 1.000 | 61 | 10.8 | $1.3 \times 10^4$ | 3.4 |
| 9 | 89.995 | 0.005 | 10.000 | 75 | 11.4 | $1.7 \times 10^4$ | 4.5 |
| 10* | 84.995 | 0.005 | 15.000 | 79 | 11.3 | $2.0 \times 10^4$ | 8.9 |
| 11* | 99.800 | 0.200 | 0 | 72 | 4.3 | $7.0 \times 10^3$ | 5.1 |
| 12 | 99.795 | 0.200 | 0.005 | 63 | 9.6 | $1.0 \times 10^4$ | 2.5 |
| 13 | 99.600 | 0.200 | 0.200 | 49 | 11.5 | $1.8 \times 10^4$ | 2.4 |
| 14 | 98.800 | 0.200 | 1.000 | 54 | 14.6 | $2.0 \times 10^4$ | 3.2 |
| 15 | 89.800 | 0.200 | 10.000 | 69 | 15.3 | $2.6 \times 10^4$ | 4.6 |

EP 0 137 044 B1

| | | | | | | | |
|---|---|---|---|---|---|---|---|
| 16* | 84.800 | 0.200 | 15.000 | 85 | 15.1 | $2.7 \times 10^4$ | 8.5 |
| 17* | 99.000 | 1.000 | 0 | 69 | 5.5 | $9.0 \times 10^3$ | 7.0 |
| 18 | 98.995 | 1.000 | 0.005 | 52 | 12.2 | $1.0 \times 10^4$ | 2.5 |
| 19 | 98.800 | 1.000 | 0.200 | 43 | 14.6 | $1.7 \times 10^4$ | 3.7 |
| 20 | 98.000 | 1.000 | 1.000 | 53 | 18.9 | $2.1 \times 10^4$ | 3.1 |
| 21 | 89.000 | 1.000 | 10.000 | 60 | 19.0 | $2.3 \times 10^4$ | 3.2 |
| 22* | 84.000 | 1.000 | 15.000 | 89 | 19.2 | $1.1 \times 10^4$ | 9.8 |
| 23* | 90.000 | 10.000 | 0 | 61 | 6.3 | $9.0 \times 10^3$ | 8.4 |
| 24 | 89.995 | 10.000 | 0.005 | 51 | 12.7 | $1.7 \times 10^4$ | 3.2 |
| 25 | 89.800 | 10.000 | 0.200 | 42 | 14.3 | $2.2 \times 10^4$ | 3.5 |
| 26 | 89.000 | 10.000 | 1.000 | 55 | 15.9 | $2.6 \times 10^4$ | 4.8 |
| 27 | 80.000 | 10.000 | 10.000 | 67 | 17.8 | $2.3 \times 10^4$ | 4.3 |
| 28* | 75.000 | 10.000 | 15.000 | 110 | 17.5 | $1.9 \times 10^4$ | 13.0 |
| 29* | 85.000 | 15.000 | 0 | 74 | 6.6 | $7.0 \times 10^3$ | 9.7 |
| 30* | 84.995 | 15.000 | 0.005 | 72 | 11.0 | $8.0 \times 10^3$ | 7.9 |
| 31* | 84.800 | 15.000 | 0.200 | 71 | 12.1 | $8.0 \times 10^3$ | 8.8 |
| 32* | 84.000 | 15.000 | 1.000 | 78 | 14.0 | $9.0 \times 10^3$ | 10.7 |
| 33* | 75.000 | 15.000 | 10.000 | 97 | 12.2 | $7.0 \times 10^3$ | 15.2 |
| 34* | 70.000 | 15.000 | 15.000 | 136 | 8.3 | $4.0 \times 10^3$ | 24.6 |

* ······ Comparison sample

## EXAMPLE 19

SrTiO$_3$, Ta$_2$O$_5$ and Y$_2$O$_3$ are used in composition ratios as shown in Table 19 and mixing, forming and firing are carried out in a similar operation as in the above-mentioned EXAMPLE 15, measurements are made under similar conditions, too, and results are shown in Table 19.

51

TABLE 19

| Sample No. | Composition ratio (mol %) | | | Characteristics | | | |
|---|---|---|---|---|---|---|---|
| | $SrTiO_3$ | $Ta_2O_5$ | $Y_2O_3$ | $V_1mA(V/mm)$ | $\alpha$ | $\varepsilon$ | tan $\delta$(%) |
| 1* | 99.995 | 0 | 0.005 | 81 | 1.0 | $4.0 \times 10^3$ | 34.6 |
| 2* | 99.800 | 0 | 0.200 | 106 | 1.3 | $4.0 \times 10^3$ | 38.2 |
| 3* | 99.000 | 0 | 1.000 | 160 | 1.4 | $6.0 \times 10^3$ | 40.5 |
| 4* | 90.000 | 0 | 10.000 | 172 | 1.7 | $7.0 \times 10^3$ | 46.8 |
| 5* | 99.995 | 0.005 | 0 | 78 | 3.3 | $5.0 \times 10^3$ | 8.6 |
| 6 | 99.990 | 0.005 | 0.005 | 87 | 9.0 | $1.0 \times 10^4$ | 5.3 |
| 7 | 99.795 | 0.005 | 0.200 | 81 | 9.4 | $1.6 \times 10^4$ | 3.8 |
| 8 | 98.995 | 0.005 | 1.000 | 86 | 10.9 | $1.9 \times 10^4$ | 2.9 |
| 9 | 89.995 | 0.005 | 10.000 | 95 | 11.3 | $2.6 \times 10^4$ | 2.2 |
| 10* | 84.995 | 0.005 | 15.000 | 107 | 11.5 | $2.1 \times 10^4$ | 7.3 |
| 11* | 99.800 | 0.200 | 0 | 72 | 4.3 | $7.0 \times 10^3$ | 5.1 |
| 12 | 99.795 | 0.200 | 0.005 | 70 | 9.2 | $1.5 \times 10^4$ | 3.5 |
| 13 | 99.600 | 0.200 | 0.200 | 59 | 10.7 | $2.6 \times 10^4$ | 2.0 |
| 14 | 98.800 | 0.200 | 1.000 | 52 | 13.7 | $3.0 \times 10^4$ | 2.7 |
| 15 | 89.800 | 0.200 | 10.000 | 61 | 15.2 | $3.1 \times 10^4$ | 2.9 |

| Sample No. | $SrTiO_3$ | $Ta_2O_5$ | $Gd_2O_3$ | | | | |
|---|---|---|---|---|---|---|---|
| 16 * | 84.800 | 0.200 | 15.000 | 70 | 15.0 | $2.7 \times 10^4$ | 8.7 |
| 17 * | 99.000 | 1.000 | 0 | 69 | 5.5 | $9.0 \times 10^3$ | 7.0 |
| 18 | 98.995 | 1.000 | 0.005 | 67 | 12.1 | $1.6 \times 10^4$ | 2.8 |
| 19 | 98.800 | 1.000 | 0.200 | 54 | 13.9 | $2.2 \times 10^4$ | 2.1 |
| 20 | 98.000 | 1.000 | 1.000 | 58 | 18.2 | $2.7 \times 10^4$ | 2.9 |
| 21 | 89.000 | 1.000 | 10.000 | 65 | 18.9 | $2.3 \times 10^4$ | 3.9 |
| 22 * | 84.000 | 1.000 | 15.000 | 98 | 19.1 | $1.1 \times 10^4$ | 8.6 |
| 23 * | 90.000 | 10.000 | 0 | 61 | 6.3 | $9.0 \times 10^3$ | 8.4 |
| 24 | 89.995 | 10.000 | 0.005 | 57 | 11.7 | $1.7 \times 10^4$ | 3.8 |
| 25 | 89.800 | 10.000 | 0.200 | 48 | 13.4 | $2.0 \times 10^4$ | 2.4 |
| 26 | 89.000 | 10.000 | 1.000 | 56 | 15.0 | $2.5 \times 10^4$ | 3.8 |
| 27 | 80.000 | 10.000 | 10.000 | 73 | 17.1 | $2.5 \times 10^4$ | 3.9 |
| 28 * | 75.000 | 10.000 | 15.000 | 109 | 17.0 | $1.9 \times 10^4$ | 9.3 |
| 29 * | 85.000 | 15.000 | 0 | 74 | 6.6 | $7.0 \times 10^3$ | 9.7 |
| 30 * | 84.995 | 15.000 | 0.005 | 70 | 10.9 | $8.0 \times 10^3$ | 7.7 |
| 31 * | 84.800 | 15.000 | 0.200 | 68 | 11.5 | $9.0 \times 10^3$ | 8.4 |
| 32 * | 84.000 | 15.000 | 1.000 | 78 | 13.7 | $9.0 \times 10^3$ | 10.6 |
| 33 * | 75.000 | 15.000 | 10.000 | 101 | 10.2 | $8.0 \times 10^3$ | 13.6 |
| 34 * | 70.000 | 15.000 | 15.000 | 139 | 7.3 | $5.0 \times 10^3$ | 23.9 |

* ······ Comparison sample

EXAMPLE 20

$SrTiO_3$, $Ta_2O_5$ and $Gd_2O_3$ are used in composition ratios shown in Table 20 and mixing, forming and firing are carried out in a similar operation as in the above-mentioned EXAMPLE 15; measurements are made under similar conditions, too, and results are shown in Table 20.

TABLE 20

| Sample No. | Composition ratio (mol %) | | | Characteristics | | | |
|---|---|---|---|---|---|---|---|
| | $SrTiO_3$ | $Ta_2O_5$ | $Gd_2O_3$ | $V_1$ mA(V/mm) | α | ε | tan δ(%) |
| 1* | 99.995 | 0 | 0.005 | 101 | 1.0 | $4.0 \times 10^3$ | 44.6 |
| 2* | 99.800 | 0 | 0.200 | 105 | 1.6 | $4.0 \times 10^3$ | 39.1 |
| 3* | 99.000 | 0 | 1.000 | 173 | 2.0 | $7.0 \times 10^3$ | 31.3 |
| 4* | 90.000 | 0 | 10.000 | 213 | 2.4 | $7.0 \times 10^3$ | 26.0 |
| 5* | 99.995 | 0.005 | 0. | 78 | 3.3 | $5.0 \times 10^3$ | 8.6 |
| 6 | 99.990 | 0.005 | 0.005 | 82 | 6.7 | $7.0 \times 10^3$ | 4.5 |
| 7 | 99.795 | 0.005 | 0.200 | 80 | 9.0 | $1.1 \times 10^4$ | 3.6 |
| 8 | 98.995 | 0.005 | 1.000 | 87 | 13.7 | $1.5 \times 10^4$ | 2.7 |
| 9 | 89.995 | 0.005 | 10.000 | 98 | 15.0 | $1.9 \times 10^4$ | 3.2 |
| 10* | 84.995 | 0.005 | 15.000 | 112 | 15.5 | $2.2 \times 10^4$ | 6.8 |
| 11* | 99.800 | 0.200 | 0 | 72 | 4.3 | $7.0 \times 10^3$ | 5.1 |
| 12 | 99.795 | 0.200 | 0.005 | 80 | 7.1 | $1.1 \times 10^4$ | 3.0 |
| 13 | 99.600 | 0.200 | 0.200 | 72 | 11.0 | $1.6 \times 10^4$ | 2.5 |
| 14 | 98.800 | 0.200 | 1.000 | 81 | 14.5 | $2.0 \times 10^4$ | 2.0 |
| 15 | 89.800 | 0.200 | 10.000 | 89 | 15.2 | $2.8 \times 10^4$ | 2.7 |

EP 0 137 044 B1

| No. | | | | | | | |
|---|---|---|---|---|---|---|---|
| 16* | 84.800 | 0.200 | 15.000 | 98 | 15.9 | $2.9 \times 10^4$ | 7.4 |
| 17* | 99.000 | 1.000 | 0 | 69 | 5.5 | $9.0 \times 10^3$ | 7.0 |
| 18 | 98.995 | 1.000 | 0.005 | 87 | 10.1 | $1.6 \times 10^4$ | 2.5 |
| 19 | 98.800 | 1.000 | 0.200 | 63 | 12.3 | $1.7 \times 10^4$ | 2.3 |
| 20 | 98.000 | 1.000 | 1.000 | 68 | 13.2 | $2.3 \times 10^4$ | 2.9 |
| 21 | 89.000 | 1.000 | 10.000 | 74 | 14.9 | $1.9 \times 10^4$ | 3.1 |
| 22* | 84.000 | 1.000 | 15.000 | 103 | 12.3 | $1.4 \times 10^4$ | 8.6 |
| 23* | 90.000 | 10.000 | 0 | 61 | 6.3 | $9.0 \times 10^3$ | 8.4 |
| 24 | 89.995 | 10.000 | 0.005 | 65 | 12.5 | $1.8 \times 10^4$ | 3.6 |
| 25 | 89.800 | 10.000 | 0.200 | 57 | 13.1 | $2.3 \times 10^4$ | 2.0 |
| 26 | 89.000 | 10.000 | 1.000 | 68 | 13.9 | $2.6 \times 10^4$ | 3.5 |
| 27 | 80.000 | 10.000 | 10.000 | 83 | 12.8 | $2.5 \times 10^4$ | 3.7 |
| 28* | 75.000 | 10.000 | 15.000 | 114 | 10.8 | $2.0 \times 10^4$ | 9.1 |
| 29* | 85.000 | 15.000 | 0 | 74 | 6.6 | $7.0 \times 10^3$ | 9.7 |
| 30* | 84.995 | 15.000 | 0.005 | 84 | 8.4 | $8.0 \times 10^3$ | 6.6 |
| 31* | 84.800 | 15.000 | 0.200 | 79 | 8.0 | $9.0 \times 10^3$ | 8.3 |
| 32* | 84.000 | 15.000 | 1.000 | 85 | 7.6 | $9.0 \times 10^3$ | 10.2 |
| 33* | 75.000 | 15.000 | 10.000 | 1.14 | 7.5 | $8.0 \times 10^3$ | 14.6 |
| 34* | 70.000 | 15.000 | 15.000 | 1.48 | 4.6 | $5.0 \times 10^3$ | 25.7 |

*······ Comparison sample

As shown by EXAMPLEs 15 through 20 $Ta_2O_5$ when added in amounts in a range of 0.005-10.000 mol %, contributes to reduce the specific resistance of the reduced fired body, and by re-firing in air it shows varistor characteristics.

This is because the granules and grain boundaries of the fired body obtained by the reduced firing have low resistances, and by re-firing in air only the crystal boundaries are gaining a high resistance thereby forming electric barriers.

However, when only $Ta_2O_5$ is added, the electric barrier formed at the grain boundaries is small, and the varistor characteristics are relatively small.

Accordingly, by adding additives such as CdO, BaO, $ZrO_2$, $La_2O_3$, $Y_2O_3$ or $Gd_2O_3$, the additive is segregated at the grain boundaries during the reduced firing, and by re-firing in air such additives form large electric barriers at the grain boundary, thereby making the varistor characteristics large.

By making only the crystal grain boundary high in resistance, capacitance characteristics are present between crystal granule-crystal grain boundaries-crystal granules.

Accordingly, by adding $Ta_2O_5$ and another additive, such as CdO, BaO, $ZrO_2$, $La_2O_3$, $Y_2O_3$ or $Gd_2O_3$ to $SrTiO_3$, it is possible to provide characteristics which combine the varistor characteristics and the capacitance characteristics.

Though in the above-mentioned EXAMPLES 15 - 20 the elucidation was made for the cases where one additive was added besides $Ta_2O_5$, it was confirmed that the same effect was obtained even when two kinds or more of oxides of elements of the group consisting cf K, Ca, Cd, In, Ba, Pb, La, Sc, Y, Cs, Au, Mg, Zr, Sn, Sb, W, Bi, Pt, Tl, Eu, Gd, Tb, Tm, Lu, Th, Ir, Os, Hf and Ru were used so that the total added amount is within the above-mentioned range.

EXAMPLE 21

$SrTiO_3$, an extremely small amount of $Nb_2O_5$ which existed from the initial stage of the material ($Nb_2O_5$ content in the material used in the present example was 0.050 mol %), $Ta_2O_5$ as metal oxide for acceleration of semiconductorization and CdO as element to improve non-linearity are used in amounts to give the composition ratios shown in the below-mentioned TABLE 21 They were mixed, ground, dried and thereafter calcinated at 1000° C for 4 hours. This mixture was ground again by a wet method in a ball mill or the like for 4 hours, then dried, subsequently granulated by adding 8 wt % of an organic binder (for instance polyvinylalcohol), and pressformed into the shape of a disc of 8.0 Ø (mm) x 1.0 t (mm) with a forming pressure of about 1.0 t/cm². The formed body was fired for 4 hours in a reducing atmosphere (e.g. $N_2 : H_2$ = 1:1, flow rate is 1.0 1/min) at 1350° C. The specific resistance of the fired body thus obtained was averagely 0.3 Ω.cm, and the average granule size was 30 μm.

The above-mentioned fired body was then baked in air for 2 hours at 1300° C to obtain a sintered body 4 of FIG.3. Both faces of the above-mentioned sintered body 4 were ground by using an abrasive such as SiC or the like, and electrodes 5, 6 were formed by using a conductive metal, such as Ag on the ground faces. The electrodes 5, 6 are circles of 5.0 Ø (mm) each.

The characteristic of the devices thus obtained are shown in TABLE 21.

TABLE 21

| Sample No. | Composition ratio (mol %) | | | | Characteristics | | | |
|---|---|---|---|---|---|---|---|---|
| | $SrTiO_3$ | $Nb_2O_5$ | $Ta_2O_5$ | CdO | $V_1$ mA/mm (V) | α | ε | tan δ (%) |
| 1* | 9 9.9 4 5 | 0.0 5 0 | 0 | 0.0 0 5 | 7 5 | 1.0 | $4.0 \times 10^3$ | 3 5.2 |
| 2* | 9 9.7 5 0 | 0.0 5 0 | 0 | 0.2 0 0 | 8 0 | 1.3 | $4.0 \times 10^3$ | 3 6.0 |
| 3* | 9 8.9 5 0 | 0.0 5 0 | 0 | 1.0 0 0 | 9 6 | 1.6 | $4.0 \times 10^3$ | 4 4.3 |
| 4* | 8 9.9 5 0 | 0.0 5 0 | 0 | 1 0.0 0 0 | 1 6 4 | 2.1 | $5.0 \times 10^3$ | 5 6.7 |
| 5* | 9 9.9 4 5 | 0.0 5 0 | 0.0 0 5 | 0 | 8 0 | 3.0 | $5.0 \times 10^3$ | 8.6 |
| 6 | 9 9.9 4 0 | 0.0 5 0 | 0.0 0 5 | 0.0 0 5 | 6 5 | 8.5 | $6.0 \times 10^3$ | 6.4 |
| 7 | 9 9.7 4 5 | 0.0 5 0 | 0.0 0 5 | 0.2 0 0 | 5 6 | 9.8 | $1.3 \times 10^4$ | 3.6 |
| 8 | 9 8.9 4 5 | 0.0 5 0 | 0.0 0 5 | 1.0 0 0 | 6 2 | 1 0.6 | $1.3 \times 10^4$ | 4.1 |
| 9 | 8 9.9 4 5 | 0.0 5 0 | 0.0 0 5 | 1 0.0 0 0 | 6 5 | 1 3.5 | $1.7 \times 10^4$ | 4.4 |
| 1 0* | 8 4.9 4 5 | 0.0 5 0 | 0.0 0 5 | 1 5.0 0 0 | 7 8 | 1 1.5 | $1.0 \times 10^4$ | 9.8 |
| 1 1* | 9 9.7 5 0 | 0.0 5 0 | 0.2 0 0 | 0 | 7 5 | 3.4 | $5.0 \times 10^3$ | 5.2 |
| 1 2 | 9 9.7 4 5 | 0.0 5 0 | 0.2 0 0 | 0.0 0 5 | 5 6 | 8.9 | $1.0 \times 10^4$ | 2.3 |
| 1 3 | 9 9.5 5 0 | 0.0 5 0 | 0.2 0 0 | 0.2 0 0 | 4 2 | 1 1.0 | $1.2 \times 10^4$ | 2.8 |
| 1 4 | 9 8.7 5 0 | 0.0 5 0 | 0.2 0 0 | 1.0 0 0 | 4 6 | 1 3.1 | $1.5 \times 10^4$ | 3.0 |
| 1 5 | 8 9.7 5 0 | 0.0 5 0 | 0.2 0 0 | 1 0.0 0 0 | 5 7 | 1 4.1 | $1.9 \times 10^4$ | 4.5 |

EP 0 137 044 B1

| | | | | | | | | |
|---|---|---|---|---|---|---|---|---|
| 16* | 8 4.7 5 0 | 0.0 5 0 | 0.2 0 0 | 1 5.0 0 0 | 7 8 | 1 2.5 | $1.1 \times 10^4$ | 9.7 |
| 17* | 9 8.9 5 0 | 0.0 5 0 | 1.0 0 0 | 0 | 7 1 | 4.5 | $6.0 \times 10^4$ | 6.0 |
| 18 | 9 8.9 4 5 | 0.0 5 0 | 1.0 0 0 | 0.0 0 5 | 4 3 | 1 0.9 | $2.0 \times 10^4$ | 2.5 |
| 19 | 9 8.7 5 0 | 0.0 5 0 | 1.0 0 0 | 0.2 0 0 | 3 4 | 1 3.0 | $2.2 \times 10^4$ | 3.6 |
| 20 | 9 7.9 5 0 | 0.0 5 0 | 1.0 0 0 | 1.0 0 0 | 4 1 | 1 6.4 | $2.3 \times 10^4$ | 3.3 |
| 21 | 8 8.9 5 0 | 0.0 5 0 | 1.0 0 0 | 1 0.0 0 0 | 5 1 | 1 8.0 | $1.5 \times 10^4$ | 4.5 |
| 22* | 8 3.9 5 0 | 0.0 5 0 | 1.0 0 0 | 1 5.0 0 0 | 8 0 | 1 5.9 | $1.0 \times 10^4$ | 1 1.0 |
| 23* | 8 9.9 5 0 | 0.0 5 0 | 1 0.0 0 0 | 0 | 6 1 | 4.8 | $6.0 \times 10^3$ | 7.0 |
| 24 | 8 9.9 4 5 | 0.0 5 0 | 1 0.0 0 0 | 0.0 0 5 | 4 1 | 1 1.3 | $1.2 \times 10^4$ | 3.3 |
| 25 | 8 9.7 5 0 | 0.0 5 0 | 1 0.0 0 0 | 0.2 0 0 | 3 2 | 1 3.1 | $1.7 \times 10^4$ | 3.6 |
| 26 | 8 8.9 5 0 | 0.0 5 0 | 1 0.0 0 0 | 1.0 0 0 | 4 3 | 1 4.9 | $1.9 \times 10^4$ | 4.3 |
| 27 | 7 9.9 5 0 | 0.0 5 0 | 1 0.0 0 0 | 1 0.0 0 0 | 5 7 | 1 5.1 | $1.7 \times 10^4$ | 4.1 |
| 28* | 7 4.9 5 0 | 0.0 5 0 | 1 0.0 0 0 | 1 5.0 0 0 | 9 8 | 1 2.0 | $1.4 \times 10^4$ | 1 3.0 |
| 29* | 8 4.9 5 0 | 0.0 5 0 | 1 5.0 0 0 | 0 | 7 9 | 5.1 | $5.0 \times 10^3$ | 7.9 |
| 30* | 8 4.9 4 5 | 0.0 5 0 | 1 5.0 0 0 | 0.0 0 5 | 6 7 | 1 0.0 | $1.1 \times 10^4$ | 6.5 |
| 31* | 8 4.7 5 0 | 0.0 5 0 | 1 5.0 0 0 | 0.2 0 0 | 6 5 | 1 0.3 | $1.1 \times 10^4$ | 7.4 |
| 32* | 8 3.9 5 0 | 0.0 5 0 | 1 5.0 0 0 | 1.0 0 0 | 7 4 | 1 1.8 | $1.0 \times 10^4$ | 1 0.9 |
| 33* | 7 4.9 5 0 | 0.0 5 0 | 1 5.0 0 0 | 1 0.0 0 0 | 9 0 | 8.9 | $4.0 \times 10^3$ | 1 6.4 |
| 34* | 6 9.9 5 0 | 0.0 5 0 | 1 5.0 0 0 | 1 5.0 0 0 | 1 7 4 | 6.1 | $4.0 \times 10^3$ | 2 7.2 |

\* ‥‥‥‥ Comparison sample

EXAMPLE 22

SrTiO$_3$, a very small amount of Nb$_2$O$_5$ which existed from the initial stage of material (contents of Nb$_2$O$_5$ of the material used in the present example was 0.050 mol %), Ta$_2$O$_5$ as metal oxide for accelerating semicconductorization and BaO as an element to improve non-linearity are formed, reduced, fired and oxidated in a similar operation as that of the above-mentioned EXAMPLE 21. Results obtained by measuring the characteristics of the devices thus obtained under similar conditions as in the above-mentioned examples are shown in TABLE 22.

59

TABLE 22

| Sample No. | Composition ratio (mol %) | | | | Characteristics | | | |
|---|---|---|---|---|---|---|---|---|
| | $SrTiO_3$ | $Nb_2O_5$ | $Ta_2O_5$ | BaO | $V_1$ mA/mm (V) | $\alpha$ | $\epsilon$ | tan $\delta$ (%) |
| 1 * | 9 9.9 4 5 | 0.0 5 0 | 0 | 0.0 0 5 | 8 4 | 1.0 | $4.0 \times 10^3$ | 3 5.4 |
| 2 * | 9 9.7 5 0 | 0.0 5 0 | 0 | 0.2 0 0 | 8 8 | 1.4 | $4.0 \times 10^3$ | 3 6.4 |
| 3 * | 9 8.9 5 0 | 0.0 5 0 | 0 | 1.0 0 0 | 1 0 5 | 1.5 | $4.0 \times 10^3$ | 4 2.5 |
| 4 * | 8 9.9 5 0 | 0.0 5 0 | 0 | 1 0.0 0 0 | 1 7 0 | 1.7 | $5.0 \times 10^3$ | 4 7.0 |
| 5 * | 9 9.9 4 5 | 0.0 5 0 | 0.0 0 5 | 0 | 8 0 | 3.0 | $5.0 \times 10^3$ | 8.6 |
| 6 | 9 9.9 4 0 | 0.0 5 0 | 0.0 0 5 | 0.0 0 5 | 6 2 | 8.6 | $7.0 \times 10^3$ | 6.3 |
| 7 | 9 9.7 4 5 | 0.0 5 0 | 0.0 0 5 | 0.2 0 0 | 5 1 | 9.8 | $9.0 \times 10^3$ | 3.4 |
| 8 | 9 8.9 4 5 | 0.0 5 0 | 0.0 0 5 | 1.0 0 0 | 5 7 | 1 0.6 | $1.7 \times 10^4$ | 3.9 |
| 9 | 8 9.9 4 5 | 0.0 5 0 | 0.0 0 5 | 1 0.0 0 0 | 6 0 | 1 1.9 | $1.9 \times 10^4$ | 4.8 |
| 1 0 * | 8 4.9 4 5 | 0.0 5 0 | 0.0 0 5 | 1 5.0 0 0 | 7 2 | 1 1.5 | $1.4 \times 10^4$ | 9.5 |
| 1 1 * | 9 9.7 5 0 | 0.0 5 0 | 0.2 0 0 | 0 | 7 5 | 3.4 | $5 \times 10^3$ | 5.2 |
| 1 2 | 9 9.7 4 5 | 0.0 5 0 | 0.2 0 0 | 0.0 0 5 | 5 6 | 9.0 | $1.4 \times 10^4$ | 2.7 |
| 1 3 | 9 9.5 5 0 | 0.0 5 0 | 0.2 0 0 | 0.2 0 0 | 3 9 | 1 0.1 | $1.6 \times 10^4$ | 2.5 |
| 1 4 | 9 8.7 5 0 | 0.0 5 0 | 0.2 0 0 | 1.0 0 0 | 4 5 | 1 1.1 | $2.0 \times 10^4$ | 2.1 |
| 1 5 | 8 9.7 5 0 | 0.0 5 0 | 0.2 0 0 | 1 0.0 0 0 | 5 4 | 1 2.3 | $1.8 \times 10^4$ | 3.2 |

| | | | | | | | | |
|---|---|---|---|---|---|---|---|---|
| 16* | 8 4.7 5 0 | 0.0 5 0 | 0.2 0 0 | 1 5.0 0 0 | 7 3 | 1 3.8 | $1.5 \times 10^4$ | 8.9 |
| 17* | 9 8.9 5 0 | 0.0 5 0 | 1.0 0 0 | 0 | 7 1 | 4.5 | $6.0 \times 10^3$ | 6.0 |
| 18 | 9 8.9 4 5 | 0.0 5 0 | 1.0 0 0 | 0.0 0 5 | 4 2 | 1 0.7 | $1.8 \times 10^4$ | 2.8 |
| 19 | 9 8.7 5 0 | 0.0 5 0 | 1.0 0 0 | 0.2 0 0 | 2 5 | 1 1.7 | $2.0 \times 10^4$ | 2.7 |
| 20 | 9 7.9 5 0 | 0.0 5 0 | 1.0 0 0 | 1.0 0 0 | 3 8 | 1 2.6 | $2.1 \times 10^4$ | 3.8 |
| 21 | 8 8.9 5 0 | 0.0 5 0 | 1.0 0 0 | 1 0.0 0 0 | 4 5 | 1 3.3 | $1.8 \times 10^4$ | 4.1 |
| 22* | 8 3.9 5 0 | 0.0 5 0 | 1.0 0 0 | 1 5.0 0 0 | 8 0 | 1 3.0 | $1.5 \times 10^4$ | 1 1.5 |
| 23* | 8 9.9 5 0 | 0.0 5 0 | 1 0.0 0 0 | 0 | 6 1 | 4.8 | $6.0 \times 10^3$ | 7.0 |
| 24 | 8 9.9 4 5 | 0.0 5 0 | 1 0.0 0 0 | 0.0 0 5 | 3 9 | 1 0.5 | $1.5 \times 10^4$ | 3.5 |
| 25 | 8 9.7 5 0 | 0.0 5 0 | 1 0.0 0 0 | 0.2 0 0 | 2 5 | 1 1.2 | $1.8 \times 10^4$ | 3.6 |
| 26 | 8 8.9 5 0 | 0.0 5 0 | 1 0.0 0 0 | 1.0 0 0 | 3 8 | 1 2.2 | $1.7 \times 10^4$ | 3.9 |
| 27 | 7 9.9 5 0 | 0.0 5 0 | 1 0.0 0 0 | 1 0.0 0 0 | 5 0 | 1 3.0 | $1.6 \times 10^4$ | 7.0 |
| 28* | 7 4.9 5 0 | 0.0 5 0 | 1 0.0 0 0 | 1 5.0 0 0 | 8 9 | 1 4.1 | $1.2 \times 10^4$ | 1 1.7 |
| 29* | 8 4.9 5 0 | 0.0 5 0 | 1 5.0 0 0 | 0 | 7 9 | 5.1 | $5.0 \times 10^3$ | 7.9 |
| 30* | 8 4.9 4 5 | 0.0 5 0 | 1 5.0 0 0 | 0.0 0 5 | 5 6 | 1 0.5 | $1.1 \times 10^4$ | 5.0 |
| 31* | 8 4.7 5 0 | 0.0 5 0 | 1 5.0 0 0 | 0.2 0 0 | 5 5 | 1 1.7 | $1.0 \times 10^4$ | 5.2 |
| 32* | 8 3.9 5 0 | 0.0 5 0 | 1 5.0 0 0 | 1.0 0 0 | 5 9 | 1 1.9 | $8.0 \times 10^3$ | 6.1 |
| 33* | 7 4.9 5 0 | 0.0 5 0 | 1 5.0 0 0 | 1 0.0 0 0 | 8 9 | 1 1.8 | $5.0 \times 10^3$ | 7.8 |
| 34* | 6 9.9 5 0 | 0.0 5 0 | 1 5.0 0 0 | 1 5.0 0 0 | 1 2 1 | 6.1 | $4.0 \times 10^3$ | 1 5.0 |

*······ Comparison sample

EXAMPLE 23

SrTiO$_3$, a very small amount of Nb$_2$O$_5$ which existed from the initial stage of material (contents of Nb$_2$O$_5$ of the material used in the present example was 0.050 mol %), Ta$_2$O$_5$ as metal oxide for accelerating semiconductorization and ZrO$_2$ as an element to improve non-linearity are formed, reduced, fired and oxidated in a similar operation as that of the above-mentioned EXAMPLE 21. Results obtained by measuring the characteristics of the devices thus obtained under similar conditions as in the above-mentioned examples are shown in TABLE 23.

TABLE 23

| Sample No. | Composition ratio (mol %) | | | | Characteristics | | | |
|---|---|---|---|---|---|---|---|---|
| | $SrTiO_3$ | $Nb_2O_5$ | $Ta_2O_5$ | $ZrO_2$ | $V_1$ mA/mm (V) | $\alpha$ | $\varepsilon$ | tan $\delta$ (%) |
| 1* | 99.945 | 0.050 | 0 | 0.005 | 105 | 1.0 | $4.0 \times 10^3$ | 41.5 |
| 2* | 99.750 | 0.050 | 0 | 0.200 | 131 | 1.1 | $4.0 \times 10^3$ | 36.1 |
| 3* | 98.950 | 0.050 | 0 | 1.000 | 177 | 1.3 | $7.0 \times 10^3$ | 34.9 |
| 4* | 89.950 | 0.050 | 0 | 10.000 | 201 | 1.9 | $8.0 \times 10^3$ | 26.8 |
| 5* | 99.945 | 0.050 | 0.005 | 0 | 80 | 3.0 | $5.0 \times 10^3$ | 8.6 |
| 6 | 99.940 | 0.050 | 0.005 | 0.005 | 65 | 6.4 | $9.0 \times 10^3$ | 5.4 |
| 7 | 99.745 | 0.050 | 0.005 | 0.200 | 54 | 7.0 | $1.2 \times 10^4$ | 2.7 |
| 8 | 98.945 | 0.050 | 0.005 | 1.000 | 63 | 8.2 | $1.9 \times 10^4$ | 3.6 |
| 9 | 89.945 | 0.050 | 0.005 | 10.000 | 69 | 9.9 | $2.1 \times 10^4$ | 4.5 |
| 10* | 84.945 | 0.050 | 0.005 | 15.000 | 90 | 11.4 | $2.2 \times 10^4$ | 8.7 |
| 11* | 99.750 | 0.050 | 0.200 | 0 | 75 | 3.4 | $5.0 \times 10^3$ | 5.2 |
| 12 | 99.745 | 0.050 | 0.200 | 0.005 | 65 | 8.9 | $1.4 \times 10^4$ | 2.8 |
| 13 | 99.550 | 0.050 | 0.200 | 0.200 | 52 | 9.9 | $1.7 \times 10^4$ | 2.6 |
| 14 | 98.750 | 0.050 | 0.200 | 1.000 | 59 | 10.4 | $2.1 \times 10^4$ | 2.9 |
| 15 | 89.750 | 0.050 | 0.200 | 10.000 | 67 | 11.3 | $2.5 \times 10^4$ | 3.2 |

EP 0 137 044 B1

| 16* | 84.750 | 0.050 | 0.200 | 15.000 | 82 | 11.6 | $2.2 \times 10^4$ | 8.9 |
|---|---|---|---|---|---|---|---|---|
| 17* | 98.945 | 0.050 | 1.000 | 0 | 71 | 4.5 | $6.0 \times 10^3$ | 6.0 |
| 18 | 98.945 | 0.050 | 1.000 | 0.005 | 62 | 11.0 | $2.0 \times 10^4$ | 2.7 |
| 19 | 98.750 | 0.050 | 1.000 | 0.200 | 53 | 12.2 | $2.2 \times 10^4$ | 2.3 |
| 20 | 97.950 | 0.050 | 1.000 | 1.000 | 61 | 13.9 | $2.5 \times 10^4$ | 3.5 |
| 21 | 88.950 | 0.050 | 1.000 | 10.000 | 67 | 14.2 | $2.6 \times 10^4$ | 3.9 |
| 22* | 83.950 | 0.050 | 1.000 | 15.000 | 86 | 13.1 | $2.3 \times 10^4$ | 10.0 |
| 23* | 89.950 | 0.050 | 10.000 | 0 | 61 | 4.8 | $6.0 \times 10^3$ | 7.0 |
| 24 | 89.945 | 0.050 | 10.000 | 0.005 | 54 | 10.7 | $1.8 \times 10^4$ | 3.0 |
| 25 | 89.750 | 0.050 | 10.000 | 0.200 | 50 | 11.4 | $1.9 \times 10^4$ | 2.7 |
| 26 | 88.950 | 0.050 | 10.000 | 1.000 | 62 | 11.8 | $2.0 \times 10^4$ | 3.5 |
| 27 | 79.950 | 0.050 | 10.000 | 10.000 | 79 | 12.0 | $1.8 \times 10^4$ | 6.8 |
| 28* | 74.950 | 0.050 | 10.000 | 15.000 | 115 | 10.4 | $1.5 \times 10^4$ | 11.9 |
| 29* | 84.950 | 0.050 | 15.000 | 0 | 79 | 5.1 | $5.0 \times 10^3$ | 7.9 |
| 30* | 84.945 | 0.050 | 15.000 | 0.005 | 73 | 10.5 | $1.0 \times 10^4$ | 6.9 |
| 31* | 84.750 | 0.050 | 15.000 | 0.200 | 65 | 11.4 | $1.1 \times 10^4$ | 6.8 |
| 32* | 83.950 | 0.050 | 15.000 | 1.000 | 79 | 108 | $9.0 \times 10^3$ | 7.4 |
| 33* | 74.950 | 0.050 | 15.000 | 10.000 | 98 | 103 | $9.0 \times 10^3$ | 7.4 |
| 34* | 69.950 | 0.050 | 15.000 | 15.000 | 154 | 100 | $8.0 \times 10^3$ | 14.7 |

*······ Comparison sample

EXAMPLE 24

SrTiO$_3$, a very small amount of Nb$_2$O$_5$ which existed from the initial stage of the material (contents of Nb$_2$O$_5$ of the material used in the present example was 0.050 mol %), Ta$_2$O$_5$ as metal oxide for accelerating semiconductorization and La$_2$O$_3$ as an element to improve non-linearity are formed, reduced, fired and oxidated in a similar operation as that of the above-mentioned EXAMPLE 21. Results obtained by measuring the characteristics of the devices thus obtained under similar conditions as in the above-mentioned examples are shown in TABLE 24.

EP 0 137 044 B1

TABLE 24

| Sample No. | Composition ratio (mol %) | | | | Characteristics | | | |
|---|---|---|---|---|---|---|---|---|
| | $SrTiO_3$ | $Nb_2O_5$ | $Ta_2O_3$ | $La_2O_3$ | $V_1$ mA/mm (V) | $\alpha$ | $\epsilon$ | tan $\delta$ (%) |
| 1* | 99.945 | 0.050 | 0 | 0.005 | 90 | 1.0 | $4.0 \times 10^3$ | 35.4 |
| 2* | 99.750 | 0.050 | 0 | 0.200 | 96 | 1.2 | $4.0 \times 10^3$ | 39.0 |
| 3* | 98.950 | 0.050 | 0 | 1.000 | 113 | 1.3 | $5.0 \times 10^3$ | 40.5 |
| 4* | 89.950 | 0.050 | 0 | 10.000 | 186 | 1.7 | $7.0 \times 10^3$ | 56.8 |
| 5* | 99.945 | 0.050 | 0.005 | 0 | 80 | 3.0 | $5.0 \times 10^3$ | 8.6 |
| 6 | 99.940 | 0.050 | 0.005 | 0.005 | 72 | 8.2 | $7.0 \times 10^3$ | 5.1 |
| 7 | 99.745 | 0.050 | 0.005 | 0.200 | 59 | 8.5 | $1.0 \times 10^4$ | 3.0 |
| 8 | 98.945 | 0.050 | 0.005 | 1.000 | 63 | 9.8 | $1.4 \times 10^4$ | 3.1 |
| 9 | 89.945 | 0.050 | 0.005 | 10.000 | 77 | 10.4 | $1.8 \times 10^4$ | 4.2 |
| 10* | 84.945 | 0.050 | 0.005 | 15.000 | 81 | 10.3 | $1.5 \times 10^4$ | 9.8 |
| 11* | 99.750 | 0.050 | 0.200 | 0 | 75 | 3.4 | $5.0 \times 10^3$ | 5.2 |
| 12 | 99.745 | 0.050 | 0.200 | 0.005 | 65 | 8.6 | $1.0 \times 10^4$ | 3.1 |
| 13 | 99.550 | 0.050 | 0.200 | 0.200 | 51 | 10.9 | $1.8 \times 10^4$ | 2.7 |
| 14 | 98.750 | 0.050 | 0.200 | 1.000 | 54 | 13.2 | $2.0 \times 10^4$ | 3.0 |
| 15 | 89.750 | 0.050 | 0.200 | 10.000 | 69 | 14.3 | $2.2 \times 10^4$ | 3.2 |

| | | | | | | | |
|---|---|---|---|---|---|---|---|
| 16 * | 8 4.7 5 0 | 0.0 5 0 | 0.2 0 0 | 1 5.0 0 0 | 8 7 | 1 4.0 | $2.3 \times 10^4$ | 8.4 |
| 17 * | 9 8.9 5 0 | 0.0 5 0 | 1.0 0 0 | 0 | 7 1 | 4.5 | $6.0 \times 10^3$ | 6.0 |
| 18 | 9 8.9 4 5 | 0.0 5 0 | 1.0 0 0 | 0.0 0 5 | 5 3 | 1 1.2 | $1.0 \times 10^4$ | 2.9 |
| 19 | 9 8.7 5 0 | 0.0 5 0 | 1.0 0 0 | 0.2 0 0 | 4 5 | 1 3.6 | $1.6 \times 10^4$ | 3.5 |
| 20 | 9 7.9 5 0 | 0.0 5 0 | 1.0 0 0 | 1.0 0 0 | 5 5 | 1 6.4 | $2.0 \times 10^4$ | 3.0 |
| 21 | 8 8.9 5 0 | 0.0 5 0 | 1.0 0 0 | 1 0.0 0 0 | 6 2 | 1 6.5 | $2.1 \times 10^4$ | 3.2 |
| 22 * | 8 3.9 5 0 | 0.0 5 0 | 1.0 0 0 | 1 5.0 0 0 | 9 1 | 1 7.0 | $1.5 \times 10^4$ | 9.9 |
| 23 * | 8 9.9 5 0 | 0.0 5 0 | 1 0.0 0 0 | 0 | 6 1 | 4.8 | $6.0 \times 10^3$ | 7.0 |
| 24 | 8 9.9 4 5 | 0.0 5 0 | 1 0.0 0 0 | 0.0 0 5 | 5 1 | 1 0.7 | $1.2 \times 10^4$ | 3.2 |
| 25 | 8 9.7 5 0 | 0.0 5 0 | 1 0.0 0 0 | 0.2 0 0 | 4 3 | 1 2.3 | $1.7 \times 10^4$ | 3.5 |
| 26 | 8 8.9 5 0 | 0.0 5 0 | 1 0.0 0 0 | 1.0 0 0 | 5 7 | 1 3.9 | $2.1 \times 10^4$ | 4.8 |
| 27 | 7 9.9 5 0 | 0.0 5 0 | 1 0.0 0 0 | 1 0.0 0 0 | 6 9 | 1 3.8 | $2.0 \times 10^4$ | 6.1 |
| 28 * | 7 4.9 5 0 | 0.0 5 0 | 1 0.0 0 0 | 1 5.0 0 0 | 1 2 0 | 1 3.5 | $1.8 \times 10^4$ | 1 1.0 |
| 29 * | 8 4.9 5 0 | 0.0 5 0 | 1 5.0 0 0 | 0 | 7 9 | 5.1 | $5.0 \times 10^3$ | 7.9 |
| 30 * | 8 4.9 4 5 | 0.0 5 0 | 1 5.0 0 0 | 0.0 0 5 | 7 5 | 1 0.0 | $8.0 \times 10^3$ | 7.5 |
| 31 * | 8 4.7 5 0 | 0.0 5 0 | 1 5.0 0 0 | 0.2 0 0 | 7 4 | 1 1.1 | $8.0 \times 10^3$ | 7.6 |
| 32 * | 8 3.9 5 0 | 0.0 5 0 | 1 5.0 0 0 | 1.0 0 0 | 7 9 | 1 2.0 | $7.0 \times 10^3$ | 8.1 |
| 33 * | 7 4.9 5 0 | 0.0 5 0 | 1 5.0 0 0 | 1 0.0 0 0 | 1 0 2 | 1 1.2 | $7.0 \times 10^3$ | 1 0.2 |
| 34 * | 6 9.9 5 0 | 0.0 5 0 | 1 5.0 0 0 | 1 5.0 0 0 | 1 4 3 | 7.9 | $5.0 \times 10^3$ | 1 4.6 |

* ······ Comparison sample

EXAMPLE 25

SrTiO$_3$, a very small amount of Nb$_2$O$_5$ which existed from the initial stage of the material (contents of Nb$_2$O$_5$ of the material used in the present example was 0.050 mol %), Ta$_2$O$_5$ as metal oxide for accelerating semiconductorization and Y$_2$O$_3$ as an element to improve non-linearity are formed, reduced , fired and oxidated in a similar operation as that of the above-mentioned EXAMPLE 21. Results obtained by measuring the characteristics of the devices thus obtained under similar conditions as in the above-mentioned examples are shown in TABLE 25.

TABLE 25

| Sample No. | Composition ratio (mol %) | | | | Characteristics | | | |
|---|---|---|---|---|---|---|---|---|
| | $SrTiO_3$ | $Nb_2O_5$ | $Ta_2O_5$ | $Y_2O_3$ | $V_1mA/mm(V)$ | $\alpha$ | $\epsilon$ | $\tan \delta (\%)$ |
| 1* | 99.945 | 0.050 | 0 | 0.005 | 82 | 1.0 | $4.0 \times 10^3$ | 35.6 |
| 2* | 99.750 | 0.050 | 0 | 0.200 | 107 | 1.3 | $4.0 \times 10^3$ | 39.2 |
| 3* | 98.950 | 0.050 | 0 | 1.000 | 161 | 1.4 | $4.0 \times 10^3$ | 41.5 |
| 4* | 89.950 | 0.050 | 0 | 10.000 | 175 | 1.5 | $7.0 \times 10^3$ | 47.8 |
| 5* | 99.945 | 0.050 | 0.005 | 0 | 80 | 3.0 | $5.0 \times 10^3$ | 8.6 |
| 6 | 99.940 | 0.050 | 0.005 | 0.005 | 89 | 8.0 | $1.0 \times 10^4$ | 5.3 |
| 7 | 99.745 | 0.050 | 0.005 | 0.200 | 83 | 9.0 | $1.5 \times 10^4$ | 3.8 |
| 8 | 98.945 | 0.050 | 0.005 | 1.000 | 88 | 9.4 | $1.9 \times 10^4$ | 3.4 |
| 9 | 89.945 | 0.050 | 0.005 | 10.000 | 97 | 10.9 | $2.1 \times 10^4$ | 3.0 |
| 10* | 84.945 | 0.050 | 0.005 | 15.000 | 111 | 11.3 | $2.0 \times 10^4$ | 7.4 |
| 11* | 99.750 | 0.050 | 0.200 | 0 | 75 | 3.4 | $5.0 \times 10^3$ | 5.2 |
| 12 | 99.745 | 0.050 | 0.200 | 0.005 | 73 | 8.2 | $1.4 \times 10^4$ | 3.6 |
| 13 | 99.550 | 0.050 | 0.200 | 0.200 | 62 | 9.9 | $1.7 \times 10^4$ | 2.8 |
| 14 | 98.750 | 0.050 | 0.200 | 1.000 | 55 | 11.7 | $2.0 \times 10^4$ | 2.5 |
| 15 | 89.750 | 0.050 | 0.200 | 10.000 | 64 | 13.2 | $2.1 \times 10^4$ | 2.9 |

EP 0 137 044 B1

EP 0 137 044 B1

| | | | | | | | | |
|---|---|---|---|---|---|---|---|---|
| 1 6 * | 8 4.7 5 0 | 0.0 5 0 | 0.2 0 0 | 1 5.0 0 0 | 7 5 | 1 3.0 | $2.2 \times 1 0^4$ | 8.9 |
| 1 7 * | 9 8.9 5 0 | 0.0 5 0 | 1.0 0 0 | 0 | 7 1 | 4.5 | $6.0 \times 1 0^3$ | 6.0 |
| 1 8 | 9 8.9 4 5 | 0.0 5 0 | 1.0 0 0 | 0.0 0 5 | 6 9 | 1 1.0 | $1.5 \times 1 0^4$ | 2.9 |
| 1 9 | 9 8.7 5 0 | 0.0 5 0 | 1.0 0 0 | 0.2 0 0 | 5 8 | 1 2.5 | $2.0 \times 1 0^4$ | 2.4 |
| 2 0 | 9 7.9 5 0 | 0.0 5 0 | 1.0 0 0 | 1.0 0 0 | 6 0 | 1 3.2 | $2.2 \times 1 0^4$ | 2.8 |
| 2 1 | 8 8.9 5 0 | 0.0 5 0 | 1.0 0 0 | 1 0.0 0 0 | 6 7 | 1 3.7 | $2.3 \times 1 0^4$ | 3.7 |
| 2 2 * | 8 3.9 5 0 | 0.0 5 0 | 1.0 0 0 | 1 5.0 0 0 | . 1 0 1 | 1 3.1 | $1.7 \times 1 0^4$ | 8.7 |
| 2 3 * | 8 9.9 5 0 | 0.0 5 0 | 1 0.0 0 0 | 0 | 6 1 | 4.8 | $6.0 \times 1 0^3$ | 7.0 |
| 2 4 | 8 9.9 4 5 | 0.0 5 0 | 1 0.0 0 0 | 0.0 0 5 | 5 7 | 1 0.7 | $1.5 \times 1 0^4$ | 3.7 |
| 2 5 | 8 9.7 5 0 | 0.0 5 0 | 1 0.0 0 0 | 0.2 0 0 | 4 9 | 1 1.4 | $1.7 \times 1 0^4$ | 2.5 |
| 2 6 | 8 8.9 5 0 | 0.0 5 0 | 1 0.0 0 0 | 1.0 0 0 | 5 6 | 1 1.7 | $1.9 \times 1 0^4$ | 3.9 |
| 2 7 | 7 9.9 5 0 | 0.0 5 0 | 1 0.0 0 0 | 1 0.0 0 0 | 7 3 | 1 0.7 | $1.9 \times 1 0^4$ | 4.1 |
| 2 8 * | 7 4.9 5 0 | 0.0 5 0 | 1 0.0 0 0 | 1 5.0 0 0 | 1 1 0 | 1 0.5 | $2.1 \times 1 0^4$ | 9.5 |
| 2 9 * | 8 4.9 5 0 | 0.0 5 0 | 1 5.0 0 0 | 0 | 7 9 | 5.1 | $5.0 \times 1 0^3$ | 7.9 |
| 3 0 * | 8 4.9 4 5 | 0.0 5 0 | 1 5.0 0 0 | 0.0 0 5 | 7 5 | 9.9 | $8.0 \times 1 0^3$ | 7.5 |
| 3 1 * | 8 4.7 5 0 | 0.0 5 0 | 1 5.0 0 0 | 0.2 0 0 | 7 4 | 1 0.4 | $8.0 \times 1 0^3$ | 8.3 |
| 3 2 * | 8 3.9 5 0 | 0.0 5 0 | 1 5.0 0 0 | 1.0 0 0 | 8 0 | 1 1.3 | $9.0 \times 1 0^3$ | 1 0.2 |
| 3 3 * | 7 4.9 5 0 | 0.0 5 0 | 1 5.0 0 0 | 1 0.0 0 0 | 1 1 0 | 1 0.0 | $9.0 \times 1 0^3$ | 1 1.4 |
| 3 4 * | 6 9.9 5 0 | 0.0 5 0 | 1 5.0 0 0 | 1 5.0 0 0 | 1 4 9 | 7.2 | $7.0 \times 1 0^3$ | 2 5.8 |

\*······· Comparison sample

## EXAMPLE 26

SrTiO$_3$, a very small amount of Nb$_2$O$_5$ which existed from the initial stage of the material (contents of Nb$_2$O$_5$ of the material used in the present example was 0.050 mol %), Ta$_2$O$_5$ as metal oxide for accelerating semiconductorization and Gd$_2$O$_3$ as an element to improve non-linearity are formed, reduced, fired and oxidated in a similar operation as that of the above-mentioned EXAMPLE 21. Results obtained by measuring the characteristics of the devices thus obtained under similar conditions as in the above-mentioned examples are shown in TABLE 26.

TABLE 26

| Sample No. | Composition ratio (mol %) | | | | Characteristics | | | |
|---|---|---|---|---|---|---|---|---|
| | $SrTiO_3$ | $Nb_2O_5$ | $Ta_2O_5$ | $Cd_2O_3$ | $V_1$ mA/mm (V) | $\alpha$ | $\varepsilon$ | tan $\delta$ (%) |
| 1* | 99.945 | 0.050 | 0 | 0.005 | 105 | 1.0 | $4.0 \times 10^3$ | 45.6 |
| 2* | 99.750 | 0.050 | 0 | 0.200 | 110 | 1.1 | $4.0 \times 10^3$ | 40.1 |
| 3* | 98.950 | 0.050 | 0 | 1.000 | 178 | 1.2 | $5.0 \times 10^3$ | 32.3 |
| 4* | 89.950 | 0.050 | 0 | 10.000 | 218 | 1.6 | $8.0 \times 10^3$ | 29.6 |
| 5* | 99.945 | 0.050 | 0.005 | 0 | 80 | 3.0 | $5.0 \times 10^3$ | 8.6 |
| 6 | 99.940 | 0.050 | 0.005 | 0.005 | 84 | 6.6 | $7.0 \times 10^3$ | 4.5 |
| 7 | 99.745 | 0.050 | 0.005 | 0.200 | 82 | 9.7 | $9.0 \times 10^3$ | 3.6 |
| 8 | 98.945 | 0.050 | 0.005 | 1.000 | 89 | 10.0 | $1.5 \times 10^4$ | 2.6 |
| 9 | 89.945 | 0.050 | 0.205 | 10.000 | 100 | 12.7 | $1.7 \times 10^4$ | 3.2 |
| 10* | 84.945 | 0.050 | 0.205 | 15.000 | 121 | 12.9 | $1.9 \times 10^4$ | 6.9 |
| 11* | 99.750 | 0.050 | 0.200 | 0 | 75 | 3.4 | $5.0 \times 10^3$ | 5.2 |
| 12 | 99.745 | 0.050 | 0.200 | 0.005 | 83 | 7.0 | $1.1 \times 10^4$ | 3.0 |
| 13 | 99.550 | 0.050 | 0.200 | 0.200 | 75 | 9.0 | $1.6 \times 10^4$ | 2.5 |
| 14 | 98.750 | 0.050 | 0.200 | 1.000 | 83 | 10.6 | $2.0 \times 10^4$ | 2.3 |
| 15 | 89.750 | 0.050 | 1.000 | 10.000 | 92 | 11.2 | $2.4 \times 10^4$ | 2.7 |

EP 0 137 044 B1

| | | | | | | | | |
|---|---|---|---|---|---|---|---|---|
| 16* | 84.750 | 0.050 | 1.000 | 15.000 | 101 | 11.9 | $2.6 \times 10^4$ | 8.4 |
| 17* | 98.950 | 0.050 | 1.000 | 0 | 71 | 4.5 | $6.0 \times 10^3$ | 6.0 |
| 18 | 98.945 | 0.050 | 1.000 | 0.005 | 89 | 9.1 | $1.3 \times 10^4$ | 2.7 |
| 19 | 98.750 | 0.050 | 1.000 | 0.200 | 65 | 0.3 | $1.4 \times 10^4$ | 2.4 |
| 20 | 97.950 | 0.050 | 1.000 | 1.000 | 70 | 11.2 | $1.8 \times 10^4$ | 2.9 |
| 21 | 88.950 | 0.050 | 1.000 | 10.000 | 76 | 12.9 | $1.9 \times 10^4$ | 3.2 |
| 22* | 83.950 | 0.050 | 1.000 | 15.000 | 106 | 12.3 | $1.7 \times 10^4$ | 9.6 |
| 23* | 89.950 | 0.050 | 10.000 | 0 | 61 | 4.8 | $6.0 \times 10^3$ | 7.0 |
| 24 | 89.945 | 0.050 | 10.000 | 0.005 | 65 | 9.5 | $1.5 \times 10^4$ | 3.5 |
| 25 | 89.750 | 0.050 | 10.000 | 0.200 | 57 | 10.1 | $1.8 \times 10^4$ | 2.3 |
| 26 | 88.950 | 0.050 | 10.000 | 1.000 | 68 | 10.9 | $2.3 \times 10^4$ | 3.4 |
| 27 | 79.950 | 0.050 | 10.000 | 10.000 | 84 | 11.8 | $2.5 \times 10^4$ | 3.7 |
| 28* | 74.950 | 0.050 | 10.000 | 15.000 | 121 | 10.2 | $2.0 \times 10^4$ | 10.1 |
| 29* | 84.950 | 0.050 | 15.000 | 0 | 79 | 5.1 | $5 \times 10^3$ | 7.9 |
| 30* | 84.945 | 0.050 | 15.000 | 0.005 | 89 | 8.5 | $8.0 \times 10^3$ | 6.9 |
| 31* | 84.750 | 0.050 | 15.000 | 0.200 | 84 | 8.1 | $9.0 \times 10^3$ | 8.3 |
| 32* | 83.950 | 0.050 | 15.000 | 1.000 | 90 | 7.7 | $9.0 \times 10^3$ | 10.4 |
| 33* | 74.950 | 0.050 | 15.000 | 10.000 | 119 | 7.5 | $8.0 \times 10^3$ | 16.4 |
| 34* | 69.950 | 0.050 | 15.000 | 15.000 | 153 | 5.6 | $6.0 \times 10^3$ | 24.9 |

* ..... Comparison sample

73

As shown by EXAMPLEs 21 through 26 in a case where $Ta_2O_5$ is added in amounts of 0.005-10.000 mol % together with a small amount of $Nb_2O_5$ this contributes to reduce the specific resistance of the reduced fired body, and by re-firing in air it shows varistor characteristics.

Herein, the amount of $Nb_2O_5$ was that of an impurity naturally included in the starting material $TiO_2$, and its concentration was in a range of 0.001-0.200 mol %

Though for semiconductorization of $SrTiO_3$, $Ta_2O_5$ is more effective than $Nb_2O_5$, the effect of $Ta_2O_5$ is not damaged even in the case wherein $Nb_2O_5$ is present at the same time. Accordingly, even when $Ta_2O_5$ and $Nb_2O_5$ are used at the same time as accelerating agent for semiconductorization, it is possible to produce the varistor characteristics.

However, in the case when only $Ta_2O_5$ and $Nb_2O_5$ are added, the electric barrier formed at the grain boundaries is low, and the varistor characteristics are relatively small.

However,when such an additive as CdO, BaO, $ZrO_2$, $La_2O_3$, $Y_2O_3$, $Gd_2O_3$ or the like is added, the added substance is segregated at the crystal granule boundaries during the reducing firing, and by re-firing in air these additives contribute to give the crystal grain boundaries a high resistance, and the varistor characteristics become greater.

Besides, since only the crystal grain boundaries are given high resistance, the capacitance characteristic is present between crystal grain-crystal grain boundary-crystal grain.

Accordingly, by adding $Ta_2O_5$, $Nb_2O_5$ and such additive as CdO, BaO, $ZrO_2$, $La_2O_3$, $Y_2O_3$ or $Gd_2O_3$ to $SrTiO_3$, it is possible to provide characteristics combining the varistor characteristics and the capacitance characteristics.

Though in the above-mentioned EXAMPLEs 21 - 26 only one other additive was added besides $Ta_2O_5$ and $Nb_2O_5$, it was confirmed that the same effect was obtained even when two kinds or more of oxides of elements of the group consisting of K, Ca, Cd, In, Ba, Pb, La, Sc, Y, Cs, Au, Mg, Zr, Sn, Sb, W, Bi, Pt, Tl, Eu, Gd, Tb, Tm, Lu, Th, Ir, Os, Hf and Ru were used in a manner that the total added amount is within the above-mentioned range.

When electrodes were provided by conductive material such as Ag on a thus obtained element, and a noise filter shown in FIG.4 was constituted therewith, and a noise input A as shown in FIG.5 was impressed thereon, an output of the same characteristics as that of the noise output B was obtained.

As is apparent from this, the noise is sufficiently eliminated, and also by combining the element unit and the coil the number of components is reduced and miniaturization becomes possible.

POSSIBLE UTILIZATION IN INDUSTRY

As has been elucidated, according to the voltage-dependent non-linear resistance ceramic composition, absorption or surge impressed on the electric and electronic apparatuses and elimination of noise can be effected by a element, and it has many functions and can be miniaturized and is indispensable for protection of a semiconductor product in electric and electronic apparatuses, therefore the practical utility thereof is extremely great.

LIST OF REFERENCE NUMERALS IN THE DRAWING

1 coil
2 capacitors
3 baristor
4 sintered body
5 electrode
6 electrode
7 element using ceramic composition of the present invention
8 coil
A noise input
B output characteristic of the noise filter circuit shown in FIG. 2
C output characteristic of the noise filter circuit shown in FIG. 1

**Claims**

1. A voltage-dependent non-linear resistance ceramic composition characterized by comprising 80.000 - 99.990 mol% of $SrTiO_3$ and 0.005 - 10.000 mol% of $Dy_2O_3$ and at least one kind of compound selected from the group consisting of A

   said A consists of 0.005 - 10.000 mol% in the form of oxide of at least one kind of element selected from the group consisting of K, Ca, Cd, In, Ba, Pb, Ag, Ce, La, Sc, Y, Cs, Au, Mg, Zr, Sn, Sb, W, Bi, Ni, Fe, Pt, Tl, Be, Li, Eu, Gd, Tb, Tm, Lu, Th, Ir, Os, Hf and Ru,

   and the mol percentages of all stated ingredients adding up to 100 mol%.

2. A voltage-dependent non-linear resistance ceramic composition
   characterized by comprising

   79.800 - 99.989 mol% of $SrTiO_3$, 0.005 - 10.000 mol% of $Dy_2O_3$, 0.001 - 0.200 mol% of $Nb_2O_5$ and 0.005 - 10.000 mol% in the form of oxide(s) of one or more element selected from the group consisting of K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf and Ru,

   and the mol percentages of all stated ingredients adding up to 100 mol%.

3. A voltage-dependent non-linear resistance ceramic composition
   characterized by comprising 80.00 - 99.990 mol% of $SrTiO_3$, 0.005 - 10.000 mol% of $Dy_2O_3$, 0.001 - 0.200 mol% of $Nb_2O_5$ and 0.005 - 10.000 mol% in the form of oxide(s) of one or more element selected from the group consisting of Ca, Ba, Ce, La, Y, Zr, Ni, Si and Gd,

   and the mol percentages of all stated ingredients adding up to 100 mol%.

4. A voltage-dependent non-linear resistance ceramic composition in accordance with claim 2,
   characterized in that it comprises

   79.800 - 99.989 mol% of $SrTiO_3$, 0.005 - 10.000 mol% of $Dy_2O_3$, 0.001 - 0.200 mol% of $Nb_2O_5$ and 0.005 - 10.000 mol% in the form of oxide(s) of one or more element selected from the group consisting of Ca, Ba, Ce, La, Y, Zr, Ni, Si and Gd.

   and the mol percentages of all stated ingredients adding up to 100 mol%.

5. A voltage-dependent non-linear resistance ceramic composition characterized by comprising 80.000 - 99.990 mol% of $SrTiO_3$ and 0.005 - 10.000 mol% of $Ta_2O_5$ and 0.005 - 10.000 mol% in the form of oxide of at least one kind of element selected from the group consisting of K, Ca, Cd, In, Ba, Pb, Mg, Zr, Sn, Sb, W, Bi, Eu, Gd, Tb, Tm, Lu, Th, Sr, Os, Hf, Ru, Pt, Tl, La, Sc, Y, Cs and Au,

   and the mol percentages of all stated ingredients
   adding up to 100 mol%.

6. A voltage-dependent non-linear resistance ceramic composition
   characterized by comprising

   79.800 - 99.989 mol% of $SrTiO_3$, 0.005 - 10.000 mol% of $Ta_2O_5$, 0.001 - 0.200 mol% of $Nb_2O_5$ and 0.005 - 10.000 mol% in the form of oxide(s) of one or more element selected from the group consisting of K, Ca, Cd, In, Ba, Pb, Mg, Zr, Sn, Sb, W, Bi, La, Sc, Y, Cs, Au, Eu, Gd, Tb, Tm, Lu, Th, Ir, Os, Hf and Ru,

   and the mol perventages of all stated ingredients adding up to 100 mol%.

7. A voltage.-dependent non-linear resistance ceramic composition in accordance with claim 5,
   characterized in that it comprises

   80.000 - 99.990 mol% of $SrTiO_3$, 0.005 - 10.000 mol% of $Ta_2O_5$, and 0.005 - 10.000 mol% in the form of oxide(s) of one or more element selected from the group consisting of Cd, Ba, Zr, Gd, La and Y,

   and the mol percentages of all stated ingredients adding up to 100 mol%.

8. A voltage-dependent non-linear resistance ceramic composition in accordance with claim 6,
   characterized in that it comprises

   79.800 - 99.989 mol% of $SrTiO_3$, 0.005 - 10.000 mol-% of $Ta_2O_5$, 0.001 - 0.200 mol% of $Nb_2O_5$ and 0.005 - 10.000 mol% in the form of oxide(s) of one or more element selected from the group consisting of Cd, Ba, Ce, La, Y, Zr, Ni, Si and Gd

EP 0 137 044 B1

and the mol percentages of all stated ingredients adding up to 100 mol%.

**Revendications**

1. Composition céramique à résistance non linéaire dépendant de la tension, caractérisée en ce qu'elle comprend 80,000 - 99,990 moles % de $SrTiO_3$ et 0,005 - 10,000 moles % de $Dy_2O_3$ et au moins une sorte d'un composé choisi dans le groupe constitué de A,

   A est constitué de 0,005 - 10,000 moles % sous forme d'un oxyde d'au moins une sorte d'élément choisi dans le groupe constitué de K, Ca, Cd, In, Ba, Pb, Ag, Ce, La, Sc, Y, Cs, Au, Mg, Zr, Sn, Sb, W, Bi, Ni, Fe, Pt, Ti, Be, Li, Eu, Gd, Tb, Tm, Lu, Th, Ir, Os, Hf et Ru,

   et les pourcentages en mole de tous les ingrédients indiqués donnant au total 100 moles %.

2. Composition céramique à résistance non linéaire dépendant de la tension,
   caractérisée en ce qu'elle comprend :
   - 79,800 - 99,989 moles % de $SrTiO_3$, 0,005 - 10,000 moles % de $Dy_2O_3$, 0,001 - 0,200 mole % de $Nb_2O_5$ et 0,005 - 10,000 moles % sous forme d'un ou d'oxydes d'un ou de plusieurs éléments choisis dans le groupe constitué de K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf et Ru,
   - et des pourcentages en mole de tous les ingrédients indiqués donnant au total 100 moles %.

3. Composition céramique à résistance non linéaire dépendant de la tension,
   caractérisée en ce qu'elle comprend : 80,00-99,990 moles % de $SrTiO_3$, 0,005 - 10,000 moles % de $Dy_2O_3$, 0,001 - 0,200 mole % de $Nb_2O_5$ et 0,005 - 10,000 moles % sous forme d'oxyde(s) d'un ou de plusieurs éléments choisis dans le groupe constitué de Ca, Ba, Ce, La, Y, Zr, Ni, Si, et Gd,
   - et les pourcentages en mole de tous les ingrédients indiqués donnant au total 100 moles %.

4. Composition céramique à résistance non linéaire dépendant de la tension selon la revendication 2,
   caractérisée en ce qu'elle comprend :
   - 79,800 - 99,989 moles % de $SrTiO_3$, 0,005 - 10,000 moles % de $Dy_2O_3$, 0,001 - 0,200 mole % de $Nb_2O_5$ et 0,005 - 10,000 moles % sous forme d'oxyde(s) d'un ou de plusieurs éléments choisis dans le groupe constitué de Ca, Ba, Ce, La, Y, Zr, Ni, Si et Gd,
   - et les pourcentages en mole de tous les ingrédients indiqués donnant au total 100 moles %.

5. Composition céramique à résistance non linéaire dépendant de la tension, caractérisée en ce qu'elle comprend : 80,000 - 99,990 moles % de $SrTiO_3$, et 0,005 - 10,000 moles % de $Ta_2O_5$, et 0,005 - 10,000 moles % sous forme d'oxyde d'au moins une sorte d'élément choisi dans le groupe constitué de K, Ca, Cd, In, Ba, Pb, Mg, Zr, Sn, Sb, W, Bi, Eu, Gd, Tb, Tm, Lu, Th, Ir, Os, Hf, Ru, Pt, Tl, La, Sc, Y, Cs et Au,
   - et les pourcentages en mole de tous les ingrédients indiqués donnant au total 100 moles %.

6. Composition céramique à résistance non linéaire dépendant de la tension,
   caractérisée en ce qu'elle comprend :
   - 79,800 - 99,989 moles % de $SrTiO_3$, 0,005 - 10,000 moles % de $Ta_2O_5$, 0,001 - 0,200 mole % de $Nb_2O_5$ et 0,005 - 10,000 moles % sous forme d'oxyde(s) d'un ou de plusieurs éléments choisis dans le groupe constitué de K, Ca, Cd, In, Ba, Pb, Mg, Zr, Sn, Sb, W, Bi, La, Sc, Y, Cs, Au, Eu, Gd, Tb, Tm, Lu, Th, Ir, Os, Hf et Ru,
   - et les pourcentages en mole de tous les ingrédients indiqués donnant au total 100 moles %.

7. Composition céramique à résistance non linéaire dépendant de la tension, selon la revendication 5,
   caractérisée en ce qu'elle comprend :
   - 80,000 - 99,990 moles % de $SrTiO_3$, 0,005 - 10,000 moles % de $Ta_2O_5$, et 0,005 - 10,000 moles % sous forme d'oxyde(s) d'un ou de plusieurs éléments choisis dans le groupe constitué de Cd, Ba, Zr, Gd, La et Y,
   - et les pourcentages en mole de tous les ingrédients indiqués donnant au total 100 moles %.

8. Composition céramique à résistance non linéaire dépendant de la tension, selon la revendication 6,
   caractérisée en ce qu'elle comprend :

76

- 79,800 - 99,989 moles % de SrTiO$_3$, 0,005 - 10,000 moles % de Ta$_2$O$_5$, 0,001 - 0,200 mole % de Nb$_2$O$_5$ et 0,005 - 10,000 moles % sous forme d'oxyde(s) d'un ou de plusieurs éléments choisis dans le groupe constitué de Cd, Ba, Ce, La, Y, Zr, Ni, Si et Gd,
- et les pourcentages en mole de tous les ingrédients indiqués donnant au total 100 moles %.

## Ansprüche

1. Eine keramische Zusammensetzung mit spannungsabhängigem nicht-linearem Widerstand, dadurch gekennzeichnet, daß sie 80,000 - 99,990 Molprozent SrTiO$_3$ und 0,005 - 10,000 Molprozent Dy$_2$O$_3$ und mindestens eine Art der Elemente, ausgewählt aus der Gruppe bestehend aus A, wobei A aus 0,005-10,000 Molprozent mindestens einer Art der Elemente, ausgewählt aus der Gruppe, bestehend aus K, Ca,Cd, In, Ba, Pb, Ag, Ce, La, Sc, Y, Cs, Au, Mg, Zr,Sn, Sb, W, Bi,Ni, Fe,Pt, Tl, Be, Li, Eu, Gd, Tb, Tm, Lu, Th, Ir, Os, Hf und Ru, in Oxidform besteht, umfaßt, und die Molprozentanteile aller genannten Bestandteile sich zu 100 Molprozent ergänzen.

2. Eine keramische Zusammensetzung mit spannungsabhängigem nicht-linearem Widerstand nach Anspruch 1, dadurch gekennzeichnet, daß sie 79,800 - 99,989 Molprozent SrTiO$_3$, 0,005 - 10,000 Molprozent Dy$_2$O$_3$, 0,001 - 0,200 Molprozent Nb$_2$O$_5$ und 0,005 - 10,000 Molprozent eines oder mehrerer der Elemente, ausgewählt aus der Gruppe, bestehend aus K, Ca, Cd, In, Ba, Pb, Ag, Ce, La, Sc, Y, Cs, Au, Mg, Zr, Sn, Sb, W, Bi, Ni, Fe, Pt, Tl, Al, Si, Be, Li, Eu, Gd, Tb, Tm, Lu, Th, Ir, Os, Hf und Ru, in Form von Oxiden umfaßt, und die Molprozentanteile aller genannten Bestandteile sich zu 100 Molprozent ergänzen.

3. Eine keramische Zusammensetzung mit spannungsabhängigem nicht-linearem Widerstand , dadurch gekennzeichnet, daß sie 80,000 - 99,990 Molprozent SrTiO$_3$, 0,005- 10,000 Molprozent Dy$_2$O$_3$, 0,001 - 0,200 Molprozent Nb$_2$O$_5$ und 0,005 - 10,000 Molprozent eines oder mehrerer der Elemente, ausgewählt aus der Gruppe bestehend aus Ca, Ba, Ce, La, Y, Zr, Ni, Si und Gd in Form von Oxiden umfaßt, und die Molprozentanteile aller genannten Bestandteile sich zu 100 Molprozent ergänzen.

4. Eine keramische Zusammensetzung mit spannungsabhängigem nicht-linearem Widerstand nach Anspruch 2, dadurch gekennzeichnet, daß sie 79,800 - 99,989 Molprozent SrTiO$_3$, 0,005-10,000 Molprozent Dy$_2$O$_3$, 0,001 - 0,200 Molprozent Nb$_2$O$_5$ und 0,005 - 10,000 Molprozent eines oder mehrerer der Elemente, ausgewählt aus der Gruppe, bestehend aus Ca,Ba, Ce,La, Y, Zr, Ni, Si und Gd in Form von Oxiden umfaßt, und die Molprozentanteile aller genannten Bestandteile sich zu 100 Molprozent ergänzen.

5. Eine keramische Zusammensetzung mit spannungsabhängigem nicht-linearem Widerstand, dadurch gekennzeichnet, daß sie 80,000 - 99,990 Molprozent SrTiO$_3$ und 0,005 - 10,000 Molprozent Ta$_2$O$_5$ und 0,005 - 10,000 Molprozent mindestens einer Art der Elemente, ausgewählt aus der Gruppe, bestehend aus K, Ca, Cd, In, Ba,Pb, Mg, Zr, Sn,Sb,W,Bi,Eu, Gd, Tb, Tm, Lu, Th,Ir, Os, Hf, Ru, Pt, Tl, La, Sc,Y, Cs und Au in Form von Oxiden umfaßt, und die Molprozentanteile aller genannten Bestandteile sich zu 100 Molprozent ergänzen.

6. Eine keramische Zusammensetzung mit spannungsabhängigem nicht-linearem Widerstand, dadurch gekennzeichnet, daß sie 79,800 - 99,989 Molprozent SrTiO$_3$, 0,005 - 10,000 Molprozent Ta$_2$O$_5$, 0,001 - 0,200 Molprozent Nb$_2$O$_5$ und 0,005 - 10,000 Molprozent eines oder mehrerer der Elemente, ausgewählt aus der Gruppe, bestehend aus K, Ca, Cd, In,Ba,Pb, Mg, Zr, Sn, Sb, W, Bi, La, Sc, Y, Cs, Au, Eu, Gd, Tb, Tm, Lu, Th, Ir, Os, Hf und Ru in Form von Oxiden umfaßt, und die Molprozentanteile aller genannten Bestandteile sich zu 100 Molprozent ergänzen.

7. Eine keramische Zusammensetzung mit spannungsabhängigem nicht-linearem Widerstand nach Anspruch 5, dadurch gekennzeichnet, daß sie 80,000 - 99,990 Molprozent SrTiO$_3$, 0,005 - 10,000 Molprozent Ta$_2$O$_5$ und 0,005 - 10,000 Molprozent eines oder mehrerer der Elemente, ausgewählt aus der Gruppe bestehend aus Cd, Ba, Zr, Gd, La und Y in Form von Oxiden umfaßt, und die Molprozentanteile aller genannten Bestandteile sich zu 100 Molprozent ergänzen.

8. Eine keramische Zusammensetzung mit spannungsabhängigem nicht-linearem Widerstand nach Anspruch 6 , dadurch gekennzeichnet, daß sie 79,800 - 99,989 Molprozent $SrTiO_3$, 0,005 - 10,000 Molprozent $Ta_2O_5$, 0,001 - 0,200 Molprozent $Nb_2O_5$ und 0,005 - 10,000 Molprozent eines oder mehrerer der Elemente, ausgewählt aus der Gruppe bestehend aus Cd, Ba, Ce, La, Y, Zr, Ni, Si und Gd in Form von Oxiden umfaßt, und die Molprozentanteile aller genannten Bestandteile sich zu 100 Molprozent ergänzen.

FIG. 1

FIG. 2

FIG. 3

FIG. 4

FIG. 5